(19) **Europäisches Patentamt / European Patent Office / Office européen des brevets**

(11) **EP 4 661 553 A1**

(12) **EUROPEAN PATENT APPLICATION**
published in accordance with Art. 153(4) EPC

(43) Date of publication:
**10.12.2025 Bulletin 2025/50**

(21) Application number: **24756084.0**

(22) Date of filing: **05.02.2024**

(51) International Patent Classification (IPC):
**H04W 72/23** (2023.01)

(52) Cooperative Patent Classification (CPC):
**G06N 3/048; G06N 20/10; H04L 5/00; H04W 72/23**

(86) International application number:
**PCT/CN2024/075890**

(87) International publication number:
**WO 2024/169710 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.02.2023 CN 202310156061**

(71) Applicant: **Huawei Technologies Co., Ltd.**
**Shenzhen, Guangdong 518129 (CN)**

(72) Inventors:
• **LIU, Lifu**
  **Shenzhen, Guangdong 518129 (CN)**
• **SUN, Yan**
  **Shenzhen, Guangdong 518129 (CN)**
• **LI, Yuan**
  **Shenzhen, Guangdong 518129 (CN)**
• **CHEN, Hongzhi**
  **Shenzhen, Guangdong 518129 (CN)**
• **XUE, Songyan**
  **Shenzhen, Guangdong 518129 (CN)**
• **PANG, Jiyong**
  **Shenzhen, Guangdong 518129 (CN)**

(74) Representative: **Thun, Clemens**
**Mitscherlich PartmbB**
**Patent- und Rechtsanwälte**
**Karlstraße 7**
**80333 München (DE)**

(54) **COMMUNICATION METHOD AND COMMUNICATION APPARATUS**

(57) This application provides a communication method and a communication apparatus, used in scenarios where AI is integrated into wireless networks, and in particular, in scenarios where AI models for beam management are integrated into wireless networks. According to the method provided in this application, a network device sends, to a terminal device, reference signal resource configuration information including indication information indicating a purpose of a reference signal resource, so that the terminal device can identify the purpose of the reference signal resource based on the indication information, to prevent the terminal device from using the reference signal resource for other purposes. For example, if the indication information indicates that the reference signal resource is for performing a first operation based on an AI model, the terminal device can be prevented from using the reference signal resource for a non-AI-model-based operation. This ensures performance of the AI model and avoids a waste of resources.

600

| Network device | Terminal device | Training device |

S610: First information

S620: First reference signal resource configuration information

S630a: Perform a first operation based on an AI model

S630b1: Second information

S630b2: Perform the first operation based on the AI model

FIG. 6

**Description**

This application claims priority to Chinese Patent Application No. 202310156061.6, filed with the China National Intellectual Property Administration on February 16, 2023 and entitled "COMMUNICATION METHOD AND COMMUNICATION APPARATUS", which is incorporated herein by reference in its entirety.

**TECHNICAL FIELD**

This application relates to the field of communication technologies, and more specifically, to a communication method and a communication apparatus.

**BACKGROUND**

Currently, artificial intelligence (artificial Intelligence, AI) has been introduced into wireless communication networks, and is widely applied to various air interface technology application scenarios, for example, AI-based channel state information (channel state information, CSI) prediction, AI-based beam management, and AI-based CSI feedback, playing an increasingly important role.

In a process of beam management using AI models, the AI model may be deployed on a training device for training and updating. Further, after training of the AI model is completed, the training device may infer an optimal beam based on the trained AI model. However, how to balance performance and resource consumption of training the AI model and/or inferring based on the trained AI model remains unresolved.

**SUMMARY**

This application provides a communication method and a communication apparatus, to balance performance and resource consumption of training an AI model, and/or balance performance and resource consumption of performing inference on an AI model.

According to a first aspect, a communication method is provided. The method may be performed by a terminal device, or may be performed by a component (for example, a chip or a circuit) of a terminal device. This is not limited herein.

The method includes: The terminal device receives first reference signal resource configuration information from a network device. The first reference signal resource configuration information includes first indication information, and the first indication information indicates that a first reference signal resource configured based on the first reference signal resource configuration information is for performing a first operation based on an AI model, or the first indication information indicates that a first reference signal resource configured based on the first reference signal resource configuration information is for obtaining a data set of a first operation based on an AI model.

Based on the technical solution, the terminal device may identify a purpose of the first reference signal resource based on the first indication information. This can prevent the terminal device from performing a non-AI-model-based operation based on the first reference signal resource, thereby helping balance performance and resource consumption of performing model training on the AI model, and/or balance performance and resource consumption of performing model inference based on the AI model.

For example, the first operation is model training or model inference on the AI model.

For example, the AI model is for beam management.

For example, the first reference signal resource configuration information may be carried in one or more of the following fields: a CSI report configuration (CSI-ReportConfig) field, a CSI resource configuration (CSI-ResourceConfig) field, a CSI-RS resource set (ResourceSet) field, or a CSI-RS resource set list (ResourceSetList) field.

With reference to the first aspect, in some implementations of the first aspect, the method further includes: The terminal device performs the first operation based on the AI model and the first reference signal resource configuration information.

Based on the technical solution, if the AI model is deployed in the terminal device, the terminal device may perform the first operation based on the AI model and the first reference signal resource configuration information.

With reference to the first aspect, in some implementations of the first aspect, the first operation is model inference on the AI model, and the method further includes: The terminal device receives second reference signal resource configuration information from the network device. The second reference signal resource configuration information includes second indication information, and the second indication information indicates that a second reference signal resource configured based on the second reference signal resource configuration information is for performing model training on the AI model, or the second indication information indicates that a second reference signal resource configured based on the second reference signal resource configuration information is for obtaining a data set for performing model training on the AI model.

Based on the technical solution, the terminal device may determine, based on the second indication information, that the second reference signal resource is for performing model training on the AI model. This can prevent the terminal device from performing model inference on the AI model based on the second reference signal resource, or prevent the terminal device from performing a non-AI-model-based operation based on the second reference signal resource, thereby helping balance performance and resource consumption of performing model training and model inference on the AI model.

With reference to the first aspect, in some implementations of the first aspect, the first reference signal resource configuration information further includes third indication information indicative of an association relationship between the first reference signal resource and the second reference signal resource; or the second reference signal resource configuration information further includes fourth indication information indicative of an association relationship between the second reference signal resource and the first reference signal resource.

Based on the technical solution, the terminal device may determine the association relationship between the first reference signal resource and the second reference signal resource based on the third indication information or the fourth indication information. In this way, the terminal device can determine that the first reference signal resource and the second reference signal resource correspond to the same AI model. Further, the terminal device can determine that the first reference signal resource and the second reference signal resource are for processing the same AI model.

For example, the third indication information indicates the association relationship between the first reference signal resource and the second reference signal resource in one or more of the following manners: the third indication information indicates an identifier of the second reference signal resource that has the association relationship with the first reference signal resource; the third indication information indicates an identifier of a reference signal resource set #2 that has an association relationship with the first reference signal resource, where the reference signal resource set #2 includes the second reference signal resource that has the association relationship with the first reference signal resource; the third indication information indicates an identifier of the second reference signal resource configuration information that has an association relationship with the first reference signal resource; or the third indication information indicates an identifier of the AI model associated with the first reference signal resource, where the identifier that is of the AI model and that is indicated by the third indication information is the same as an identifier that is of the AI model associated with the second reference signal resource and that is indicated by the fourth indication information, and the fourth indication information is included in the second reference signal resource configuration information.

For example, the fourth indication information indicates the association relationship between the first reference signal resource and the second reference signal resource in one or more of the following manners: the fourth indication information indicates an identifier of the first reference signal resource that has the association relationship with the second reference signal resource; the fourth indication information indicates an identifier of a reference signal resource set #1 that has an association relationship with the second reference signal resource, where the reference signal resource set #1 includes the first reference signal resource that has the association relationship with the second reference signal resource; the fourth indication information indicates an identifier of the first reference signal resource configuration information that has an association relationship with the second reference signal resource; or the fourth indication information indicates an identifier of the AI model associated with the second reference signal resource, where the identifier that is of the AI model and that is indicated by the fourth indication information is the same as an identifier that is of the AI model associated with the first reference signal resource and that is indicated by the third indication information, and the third indication information is included in the first reference signal resource configuration information.

With reference to the first aspect, in some implementations of the first aspect, the first operation is model inference on the AI model; the first reference signal resource is a reference signal resource corresponding to input information for model inference of the AI model; and the first reference signal resource configuration information further includes first identifier information. The first identifier information corresponds to a target reference signal resource set, and the target reference signal resource set includes a reference signal resource corresponding to a label in a model training process of the AI model.

For example, the reference signal resource corresponding to the label in the model training process of the AI model is denoted as a reference signal resource #1. A correspondence between the label in the model training process of the AI model and the reference signal resource #1 may be described as follows: The reference signal resource #1 is for obtaining the label in the model training process of the AI model. When the label in the model training process of the AI model corresponds to the reference signal resource #1, the terminal device may determine the AI model based on the reference signal resource #1, or determine the AI model based on the target reference signal resource set.

Based on the technical solution, when the first reference signal resource configuration information includes the first identifier information, the terminal device may determine the target reference signal resource set based on the first identifier information, and then determine the AI model based on the target reference signal resource set. In this way, the terminal device can determine that the first reference signal resource is for performing the first operation on the determined AI model.

For example, the first identifier information includes a sequence number of the target reference signal resource set in a first target reference signal resource set group, the first target reference signal resource set group is a reference signal resource set group configured for a plurality of cells or a plurality of network devices, the plurality of network devices include the network device accessed by the terminal device, and the plurality of cells include a cell in which the terminal device runs the AI model in the network device accessed by the terminal device.

With reference to the first aspect, in some implementations of the first aspect, the method further includes: The terminal device receives fifth reference signal resource configuration information from the network device. The fifth reference signal resource configuration information is for configuring the target reference signal resource set, the fifth reference signal resource configuration information includes the first identifier information, the fifth reference signal resource configuration information further includes second identifier information, and the second identifier information corresponds to the target reference signal resource set.

Based on the technical solution, when both the first reference signal resource configuration information and the fifth reference signal resource configuration information include the first identifier information, the terminal device may determine an association relationship between the first reference signal resource configuration information and the fifth reference signal resource configuration information based on the first identifier information. Then, the terminal device determines, based on the second identifier information included in the fifth reference signal resource configuration information, that the target reference signal resource set includes a reference signal resource corresponding to output information of inference of the AI model. Finally, the terminal device may determine, based on the target reference signal resource set, the AI model corresponding to the target reference signal resource set, and determine that the first reference signal resource is for performing model inference on the determined AI model.

For example, the second identifier information includes a sequence number of the target reference signal resource set in a first target reference signal resource set group, the first target reference signal resource set group is a reference signal resource set group configured for a plurality of cells or a plurality of network devices, the plurality of network devices include the network device accessed by the terminal device, and the plurality of cells include a cell in which the terminal device runs the AI model in the network device accessed by the terminal device. The first identifier information includes a sequence number of the target reference signal resource set in a second target reference signal resource set group, and the second target reference signal resource set group is a reference signal resource set group configured for the cell in which the terminal device runs the AI model.

With reference to the first aspect, in some implementations of the first aspect, the first operation is model training on the AI model, and the first indication information further indicates that the first reference signal resource is for obtaining a label of performing model training on the AI model.

Based on the technical solution, if the resource for obtaining the label of performing model training on the AI model and a resource for obtaining input information of performing model training on the AI model are different resources, the terminal device may determine, based on the first indication information, that the first reference signal resource is for obtaining the label of performing model training on the AI model, to prevent the terminal device from using the first reference signal resource for another purpose.

With reference to the first aspect, in some implementations of the first aspect, the first reference signal resource configuration information further includes fifth indication information, and the fifth indication information indicates that the first reference signal resource is for obtaining a label of performing model training on the AI model.

Based on the technical solution, if the resource for obtaining the label of performing model training on the AI model and a resource for obtaining input information of performing model training on the AI model are different resources, the terminal device may determine, based on the fifth indication information, that the first reference signal resource is for obtaining the label of performing model training on the AI model, to prevent the terminal device from using the first reference signal resource for another purpose.

With reference to the first aspect, in some implementations of the first aspect, the method further includes: The terminal device receives third reference signal resource configuration information from the network device. The third reference signal resource configuration information includes sixth indication information, and the sixth indication information indicates that a third reference signal resource configured based on the third reference signal resource configuration information is for obtaining input information of performing model training on the AI model.

With reference to the first aspect, in some implementations of the first aspect, the first reference signal resource configuration information further includes seventh indication information indicative of an association relationship between the first reference signal resource and the third reference signal resource; or the third reference signal resource configuration information further includes eighth indication information indicative of an association relationship between the first reference signal resource and the third reference signal resource.

Based on the technical solution, the terminal device may determine the association relationship between the first reference signal resource and the third reference signal resource based on the seventh indication information or the eighth indication information. In this way, the terminal device can determine that the first reference signal resource and the third reference signal resource correspond to the same AI model, and the terminal device can determine that the first reference signal resource and the third reference signal resource are for performing model training on the same AI model.

With reference to the first aspect, in some implementations of the first aspect, the method further includes: The terminal device obtains the input information and the label based on the association relationship between the first reference signal resource and the third reference signal resource.

For example, the seventh indication information indicates the association relationship between the first reference signal resource and the third reference signal resource in one or more of the following manners: the seventh indication information indicates a time offset value of the first reference signal resource relative to the third reference signal resource; the seventh indication information indicates an identifier of the third reference signal resource that has the association relationship with the first reference signal resource; the seventh indication information indicates an identifier of a reference signal resource set #3 that has an association relationship with the first reference signal resource, where the reference signal resource set #3 includes the third reference signal resource that has the association relationship with the first reference signal resource; the seventh indication information indicates an identifier of the third reference signal resource configuration information that has an association relationship with the first reference signal resource; or the seventh indication information indicates an identifier of the AI model associated with the first reference signal resource, where the identifier that is of the AI model and that is indicated by the seventh indication information is the same as an identifier that is of the AI model associated with the third reference signal resource and that is indicated by the eighth indication information, and the eighth indication information is included in the third reference signal resource configuration information.

For example, the eighth indication information indicates the association relationship between the first reference signal resource and the third reference signal resource in one or more of the following manners: the eighth indication information indicates a time offset value of the third reference signal resource relative to the first reference signal resource; the eighth indication information indicates an identifier of the first reference signal resource that has the association relationship with the third reference signal resource; the eighth indication information indicates an identifier of a reference signal resource set #1 that has an association relationship with the third reference signal resource, where the reference signal resource set #1 includes the first reference signal resource that has the association relationship with the third reference signal resource; the eighth indication information indicates an identifier of the first reference signal resource configuration information that has an association relationship with the third reference signal resource; or the eighth indication information indicates an identifier of the AI model associated with the third reference signal resource, where the identifier that is of the AI model and that is indicated by the eighth indication information is the same as an identifier that is of the AI model associated with the first reference signal resource and that is indicated by the seventh indication information, and the seventh indication information is included in the first reference signal resource configuration information.

For example, the third reference signal resource corresponds to a synchronization signal block (synchronization signal and PBCH block, SSB) resource, and the first reference signal resource corresponds to a channel state information reference signal (channel state information reference signal, CSI-RS) resource.

With reference to the first aspect, in some implementations of the first aspect, that the first indication information indicates that the first reference signal resource configured based on the first reference signal resource configuration information is for performing the first operation based on the AI model includes: The first indication information indicates that the first operation based on the AI model is in an enabled state.

With reference to the first aspect, in some implementations of the first aspect, the method further includes: The terminal device receives fourth reference signal resource configuration information from the network device. The fourth reference signal resource configuration information includes ninth indication information, and the ninth indication information indicates that a fourth reference signal resource configured based on the fourth reference signal resource configuration information is for performing a non-AI-model-based operation.

With reference to the first aspect, in some implementations of the first aspect, the first operation is model training on the AI model, and the first indication information further indicates that the first reference signal resource is for obtaining input information of performing model training on the AI model.

Based on the technical solution, if the resource for obtaining the label of performing model training on the AI model and a resource for obtaining input information of performing model training on the AI model are different resources, the terminal device may determine, based on the first indication information, that the first reference signal resource is for obtaining the input information of performing model training on the AI model, to prevent the terminal device from using the first reference signal resource for another purpose.

With reference to the first aspect, in some implementations of the first aspect, the first operation is model inference on the AI model, and the first indication information further indicates that the first reference signal resource is for obtaining input information of performing model inference on the AI model.

Based on the technical solution, the terminal device may determine, based on the first indication information, that the first reference signal resource is for obtaining the input information of performing model inference on the AI model. This can prevent the terminal device from performing model training on the AI model based on the first reference signal resource, or prevent the terminal device from performing a non-AI-model-based operation based on the first reference signal resource, thereby helping balance performance and resource consumption of performing model training and model inference on the AI model.

With reference to the first aspect, in some implementations of the first aspect, the method further includes: The terminal device sends first information to the network device, where the first information is for requesting the first operation based on the AI model.

For example, if the first operation is model training on the AI model, the first information may include one or more of the following: an identifier of the AI model, computing power information of the terminal device, sparse beam indication information, or a training mechanism of the AI model.

For example, if the first operation is model inference on the AI model, the first information may include one or more of the following: an identifier of the AI model, indication information #1, or sparse beam indication information. The indication information #1 indicates that training of the AI model is completed.

According to a second aspect, a communication method is provided. The method may be performed by a terminal device, or may be performed by a component (for example, a chip or a circuit) of a terminal device. This is not limited herein.

The method includes: The terminal device receives first reference signal resource configuration information from a network device. The first reference signal resource configuration information includes first indication information, and the first indication information indicates that a first reference signal resource configured based on the first reference signal resource configuration information is for performing model training on an AI model, or the first indication information indicates that a first reference signal resource configured based on the first reference signal resource configuration information is for obtaining a data set for performing model training on an AI model.

Based on the technical solution, the terminal device may identify a purpose of the first reference signal resource based on the first indication information. This can prevent the terminal device from performing a non-AI-model-based operation based on the first reference signal resource, or prevent the terminal device from performing model inference on the AI model based on the first reference signal resource, thereby helping balance performance and resource consumption of performing model training and model inference on the AI model.

For example, the AI model is for beam management.

For example, the first reference signal resource configuration information may be carried in one or more of the following fields: a CSI report configuration field, a CSI resource configuration field, a CSI-RS resource set field, or a CSI-RS resource set list field.

With reference to the second aspect, in some implementations of the second aspect, the method further includes: The terminal device performs model training on the AI model based on the first reference signal resource configuration information.

Based on the technical solution, if the AI model is deployed in the terminal device, the terminal device may perform model training on the AI model based on the first reference signal resource configuration information.

With reference to the second aspect, in some implementations of the second aspect, the first indication information further indicates that the first reference signal resource is for obtaining a label of performing model training on the AI model.

Based on the technical solution, if the resource for obtaining the label of performing model training on the AI model and a resource for obtaining input information of performing model training on the AI model are different resources, the terminal device may determine, based on the first indication information, that the first reference signal resource is for obtaining the label of performing model training on the AI model, to prevent the terminal device from using the first reference signal resource for another purpose.

With reference to the second aspect, in some implementations of the second aspect, the first reference signal resource configuration information further includes fifth indication information, and the fifth indication information indicates that the first reference signal resource is for obtaining a label of performing model training on the AI model.

Based on the technical solution, if the resource for obtaining the label of performing model training on the AI model and a resource for obtaining input information of performing model training on the AI model are different resources, the terminal device may determine, based on the fifth indication information, that the first reference signal resource is for obtaining the label of performing model training on the AI model, to prevent the terminal device from using the first reference signal resource for another purpose.

With reference to the second aspect, in some implementations of the second aspect, the method further includes: The terminal device receives third reference signal resource configuration information from the network device. The third reference signal resource configuration information includes sixth indication information, and the sixth indication information indicates that a third reference signal resource configured based on the third reference signal resource configuration information is for obtaining input information of performing model training on the AI model.

With reference to the second aspect, in some implementations of the second aspect, the first reference signal resource configuration information further includes seventh indication information indicative of an association relationship between the first reference signal resource and the third reference signal resource; or the third reference signal resource configuration information further includes eighth indication information indicative of an association relationship between the first reference signal resource and the third reference signal resource.

Based on the technical solution, the terminal device may determine the association relationship between the first reference signal resource and the third reference signal resource based on the seventh indication information or the eighth indication information. In this way, the terminal device can determine that the first reference signal resource and the third reference signal resource correspond to the same AI model.

With reference to the second aspect, in some implementations of the second aspect, the method further includes: The terminal device obtains the input information and the label based on the association relationship between the first reference signal resource and the third reference signal resource.

For example, the seventh indication information indicates the association relationship between the first reference signal resource and the third reference signal resource in one or more of the following manners: the seventh indication information indicates a time offset value of the first reference signal resource relative to the third reference signal resource; the seventh indication information indicates an identifier of the third reference signal resource that has the association relationship with the first reference signal resource; the seventh indication information indicates an identifier of a reference signal resource set #3 that has an association relationship with the first reference signal resource, where the reference signal resource set #3 includes the third reference signal resource that has the association relationship with the first reference signal resource; the seventh indication information indicates an identifier of the third reference signal resource configuration information that has an association relationship with the first reference signal resource; or the seventh indication information indicates an identifier of the AI model associated with the first reference signal resource, where the identifier that is of the AI model and that is indicated by the seventh indication information is the same as an identifier that is of the AI model associated with the third reference signal resource and that is indicated by the eighth indication information, and the eighth indication information is included in the third reference signal resource configuration information.

For example, the eighth indication information indicates the association relationship between the first reference signal resource and the third reference signal resource in one or more of the following manners: the eighth indication information indicates a time offset value of the third reference signal resource relative to the first reference signal resource; the eighth indication information indicates an identifier of the first reference signal resource that has the association relationship with the third reference signal resource; the eighth indication information indicates an identifier of a reference signal resource set #1 that has an association relationship with the third reference signal resource, where the reference signal resource set #1 includes the first reference signal resource that has the association relationship with the third reference signal resource; the eighth indication information indicates an identifier of the first reference signal resource configuration information that has an association relationship with the third reference signal resource; or the eighth indication information indicates an identifier of the AI model associated with the third reference signal resource, where the identifier that is of the AI model and that is indicated by the eighth indication information is the same as an identifier that is of the AI model associated with the first reference signal resource and that is indicated by the seventh indication information, and the seventh indication information is included in the first reference signal resource configuration information.

For example, the third reference signal resource corresponds to an SSB resource, and the first reference signal resource corresponds to a CSI-RS resource.

With reference to the second aspect, in some implementations of the second aspect, the method further includes: The terminal device sends first information to the network device. The first information is for requesting to perform model training based on the AI model, and the first information includes one or more of the following: an identifier of the AI model, computing power information of the terminal device, sparse beam indication information, or a training mechanism of the AI model.

According to a third aspect, a communication method is provided. The method may be performed by a terminal device, or may be performed by a component (for example, a chip or a circuit) of a terminal device. This is not limited herein.

The method includes: The terminal device receives first reference signal resource configuration information from a network device. The first reference signal resource configuration information includes first indication information, and the first indication information indicates that a first reference signal resource configured based on the first reference signal resource configuration information is for performing model inference on an AI model, or the first indication information indicates that a first reference signal resource configured based on the first reference signal resource configuration information is for obtaining a data set for performing model inference on an AI model.

Based on the technical solution, the terminal device may identify a purpose of the first reference signal resource based on the first indication information. This can prevent the terminal device from performing a non-AI-model-based operation based on the first reference signal resource, or prevent the terminal device from performing model training on the AI model based on the first reference signal resource, thereby helping balance performance and resource consumption of performing model inference on the AI model.

For example, the AI model is for beam management.

For example, the first reference signal resource configuration information may be carried in one or more of the following fields: a CSI report configuration field, a CSI resource configuration field, a CSI-RS resource set field, or a CSI-RS resource set list field.

With reference to the third aspect, in some implementations of the third aspect, the method further includes: The terminal device performs model inference based on the AI model and the first reference signal resource configuration information.

Based on the technical solution, if the AI model is deployed in the terminal device, the terminal device may perform model inference based on the AI model and the first reference signal resource configuration information.

With reference to the third aspect, in some implementations of the third aspect, the method further includes: The terminal device receives second reference signal resource configuration information from the network device. The second reference signal resource configuration information includes second indication information, and the second indication information indicates that a second reference signal resource configured based on the second reference signal resource configuration information is for performing model training on the AI model, or the second indication information indicates that a second reference signal resource configured based on the second reference signal resource configuration information is for obtaining a data set for performing model training on the AI model.

Based on the technical solution, the terminal device may determine, based on the second indication information, that the second reference signal resource is for performing model training on the AI model. This can prevent the terminal device from performing model inference on the AI model based on the second reference signal resource, or prevent the terminal device from performing a non-AI-model-based operation based on the second reference signal resource, thereby helping balance performance and resource consumption of performing model training on the AI model.

With reference to the third aspect, in some implementations of the third aspect, the first reference signal resource configuration information further includes third indication information indicative of an association relationship between the first reference signal resource and the second reference signal resource; or the second reference signal resource configuration information further includes fourth indication information indicative of an association relationship between the second reference signal resource and the first reference signal resource.

Based on the technical solution, the terminal device may determine the association relationship between the first reference signal resource and the second reference signal resource based on the third indication information or the fourth indication information. In this way, the terminal device can determine that the first reference signal resource and the second reference signal resource correspond to the same AI model. Further, the terminal device can determine that the first reference signal resource and the second reference signal resource are for processing the same AI model.

For example, the third indication information indicates the association relationship between the first reference signal resource and the second reference signal resource in one or more of the following manners: the third indication information indicates an identifier of the second reference signal resource that has the association relationship with the first reference signal resource; the third indication information indicates an identifier of a reference signal resource set #2 that has an association relationship with the first reference signal resource, where the reference signal resource set #2 includes the second reference signal resource that has the association relationship with the first reference signal resource; the third indication information indicates an identifier of the second reference signal resource configuration information that has an association relationship with the first reference signal resource; or the third indication information indicates an identifier of the AI model associated with the first reference signal resource, where the identifier that is of the AI model and that is indicated by the third indication information is the same as an identifier that is of the AI model associated with the second reference signal resource and that is indicated by the fourth indication information, and the fourth indication information is included in the second reference signal resource configuration information.

For example, the fourth indication information indicates the association relationship between the first reference signal resource and the second reference signal resource in one or more of the following manners: the fourth indication information indicates an identifier of the first reference signal resource that has the association relationship with the second reference signal resource; the fourth indication information indicates an identifier of a reference signal resource set #1 that has an association relationship with the second reference signal resource, where the reference signal resource set #1 includes the first reference signal resource that has the association relationship with the second reference signal resource; the fourth indication information indicates an identifier of the first reference signal resource configuration information that has an association relationship with the second reference signal resource; or the fourth indication information indicates an identifier of the AI model associated with the second reference signal resource, where the identifier that is of the AI model and that is indicated by the fourth indication information is the same as an identifier that is of the AI model associated with the first reference signal resource and that is indicated by the third indication information, and the third indication information is included in the first reference signal resource configuration information.

With reference to the third aspect, in some implementations of the third aspect, the first reference signal resource is a reference signal resource corresponding to input information for model inference of the AI model; and the first reference signal resource configuration information further includes first identifier information. The first identifier information corresponds to a target reference signal resource set, and the target reference signal resource set includes a reference signal resource corresponding to a label in a model training process of the AI model.

Based on the technical solution, the terminal device may determine the target reference signal resource set based on the first identifier information, and then determine the AI model based on the target reference signal resource set. In this way, the terminal device can determine that the first reference signal resource is for performing the first operation on the determined AI model.

For example, the first identifier information includes a sequence number of the target reference signal resource set in a first target reference signal resource set group, the first target reference signal resource set group is a reference signal resource set group configured for a plurality of cells or a plurality of network devices, the plurality of network devices include the network device accessed by the terminal device, and the plurality of cells include a cell in which the terminal device runs the AI model in the network device accessed by the terminal device.

With reference to the third aspect, in some implementations of the third aspect, the method further includes: The terminal device receives fifth reference signal resource configuration information from the network device. The fifth reference signal resource configuration information is for configuring the target reference signal resource set, the fifth reference signal resource configuration information includes the first identifier information, the fifth reference signal resource configuration information further includes second identifier information, and the second identifier information corresponds to the target reference signal resource set.

Based on the technical solution, the terminal device may determine, based on the first identifier information, an association relationship between the first reference signal resource configuration information and the fifth reference signal resource configuration information. Then, the terminal device determines, based on the second identifier information included in the fifth reference signal resource configuration information, that the target reference signal resource set includes a reference signal resource corresponding to output information of inference of the AI model. Finally, the terminal device may determine, based on the target reference signal resource set, the AI model corresponding to the target reference signal resource set, and determine that the first reference signal resource is for performing model inference on the determined AI model.

For example, the second identifier information includes a sequence number of the target reference signal resource set in a first target reference signal resource set group, the first target reference signal resource set group is a reference signal resource set group configured for a plurality of cells or a plurality of network devices, the plurality of network devices include the network device accessed by the terminal device, and the plurality of cells include a cell in which the terminal device runs the AI model in the network device accessed by the terminal device. The first identifier information includes a sequence number of the target reference signal resource set in a second target reference signal resource set group, and the second target reference signal resource set group is a reference signal resource set group configured for the cell in which the terminal device runs the AI model.

With reference to the third aspect, in some implementations of the third aspect, the method further includes: The terminal device sends first information to the network device. The first information is for requesting to perform model inference on the AI model, and the first information includes one or more of the following: an identifier of the AI model, indication information #1, or sparse beam indication information. The indication information #1 indicates that training of the AI model is completed.

According to a fourth aspect, a communication method is provided. The method may be performed by a network device, or may be performed by a component (for example, a chip or a circuit) of a network device. This is not limited herein.

The method includes: The network device sends first reference signal resource configuration information to a terminal device. The first reference signal resource configuration information includes first indication information, and the first indication information indicates that a first reference signal resource configured based on the first reference signal resource configuration information is for performing a first operation based on an AI model, or the first indication information indicates that a first reference signal resource configured based on the first reference signal resource configuration information is for obtaining a data set of a first operation based on an AI model.

For beneficial effect of the fourth aspect and the implementations of the fourth aspect, refer to the descriptions of the first aspect.

With reference to the fourth aspect, in some implementations of the fourth aspect, the first operation is model training or model inference on the AI model.

With reference to the fourth aspect, in some implementations of the fourth aspect, the first operation is model inference on the AI model, and the method further includes: The network device sends second reference signal resource configuration information to the terminal device. The second reference signal resource configuration information includes second indication information, and the second indication information indicates that a second reference signal resource configured based on the second reference signal resource configuration information is for performing model training on the AI model, or the second indication information indicates that a second reference signal resource configured based on the second reference signal resource configuration information is for obtaining a data set for performing model training on the AI model.

With reference to the fourth aspect, in some implementations of the fourth aspect, the first reference signal resource configuration information further includes third indication information indicative of an association relationship between the first reference signal resource and the second reference signal resource; or the second reference signal resource configuration information further includes fourth indication information indicative of an association relationship between the second reference signal resource and the first reference signal resource.

With reference to the fourth aspect, in some implementations of the fourth aspect, the first operation is model inference on the AI model; the first reference signal resource is a reference signal resource corresponding to input information for model inference of the AI model; and the first reference signal resource configuration information further includes first identifier information. The first identifier information corresponds to a target reference signal resource set, and the target reference signal resource set includes a reference signal resource corresponding to a label in a model training process of the AI model.

For example, the first identifier information includes a sequence number of the target reference signal resource set in a first target reference signal resource set group, the first target reference signal resource set group is a reference signal resource set group configured for a plurality of cells or a plurality of network devices, the plurality of network devices include the network device accessed by the terminal device, and the plurality of cells include a cell in which the terminal device runs the AI model in the network device accessed by the terminal device.

With reference to the fourth aspect, in some implementations of the fourth aspect, the method further includes: The network device sends fifth reference signal resource configuration information to the terminal device. The fifth reference signal resource configuration information is for configuring the target reference signal resource set, the fifth reference signal resource configuration information includes the first identifier information, the fifth reference signal resource configuration information further includes second identifier information, and the second identifier information corresponds to the target reference signal resource set.

For example, the second identifier information includes a sequence number of the target reference signal resource set in a first target reference signal resource set group, the first target reference signal resource set group is a reference signal resource set group configured for a plurality of cells or a plurality of network devices, the plurality of network devices include the network device accessed by the terminal device, and the plurality of cells include a cell in which the terminal device runs the AI model in the network device accessed by the terminal device. The first identifier information includes a sequence number of the target reference signal resource set in a second target reference signal resource set group, and the second target reference signal resource set group is a reference signal resource set group configured for the cell in which the terminal device runs the AI model.

With reference to the fourth aspect, in some implementations of the fourth aspect, the first operation is model training on the AI model, and the first indication information further indicates that the first reference signal resource is for obtaining a label of performing model training on the AI model.

With reference to the fourth aspect, in some implementations of the fourth aspect, the first reference signal resource configuration information further includes fifth indication information, and the fifth indication information indicates that the first reference signal resource is for obtaining a label of performing model training on the AI model.

With reference to the fourth aspect, in some implementations of the fourth aspect, the method further includes: The network device sends third reference signal resource configuration information to the terminal device. The third reference signal resource configuration information includes sixth indication information, and the sixth indication information indicates that a third reference signal resource configured based on the third reference signal resource configuration information is for obtaining input information of performing model training on the AI model.

With reference to the fourth aspect, in some implementations of the fourth aspect, the first reference signal resource configuration information further includes seventh indication information indicative of an association relationship between the first reference signal resource and the third reference signal resource; or the third reference signal resource configuration information further includes eighth indication information indicative of an association relationship between the first reference signal resource and the third reference signal resource.

For example, the third reference signal resource corresponds to an SSB resource, and the first reference signal resource corresponds to a CSI-RS resource.

With reference to the fourth aspect, in some implementations of the fourth aspect, that the first indication information indicates that the first reference signal resource configured based on the first reference signal resource configuration information is for performing the first operation based on the AI model includes: The first indication information indicates that the first operation based on the AI model is in an enabled state.

With reference to the fourth aspect, in some implementations of the fourth aspect, the method further includes: The network device sends fourth reference signal resource configuration information to the terminal device. The fourth reference signal resource configuration information includes ninth indication information, and the ninth indication information indicates that a fourth reference signal resource configured based on the fourth reference signal resource configuration information is for performing a non-AI-model-based operation.

With reference to the fourth aspect, in some implementations of the fourth aspect, the first operation is model training on the AI model, and the first indication information further indicates that the first reference signal resource is for obtaining input information of performing model training on the AI model.

With reference to the fourth aspect, in some implementations of the fourth aspect, the first operation is model inference on the AI model, and the first indication information further indicates that the first reference signal resource is for obtaining input information of performing model inference on the AI model.

With reference to the fourth aspect, in some implementations of the fourth aspect, the method further includes:

The network device receives first information from the terminal device, where the first information is for requesting the first operation based on the AI model.

For example, if the first operation is model training on the AI model, the first information may include one or more of the following: an identifier of the AI model, computing power information of the terminal device, sparse beam indication information, or a training mechanism of the AI model.

For example, if the first operation is model inference on the AI model, the first information may include one or more of the following: an identifier of the AI model, indication information #1, or sparse beam indication information. The indication information #1 indicates that training of the AI model is completed.

With reference to the fourth aspect, in some implementations of the fourth aspect, the first reference signal resource configuration information may be carried in one or more of the following fields: a CSI report configuration field, a CSI resource configuration field, a CSI-RS resource set field, or a CSI-RS resource set list field.

With reference to the fourth aspect, in some implementations of the fourth aspect, the AI model is for beam management.

According to a fifth aspect, a communication method is provided. The method may be performed by a network device, or may be performed by a component (for example, a chip or a circuit) of a network device. This is not limited herein.

The method includes: The network device sends first reference signal resource configuration information to a terminal device. The first reference signal resource configuration information includes first indication information, and the first indication information indicates that a first reference signal resource configured based on the first reference signal resource configuration information is for performing model training on an AI model, or the first indication information indicates that a first reference signal resource configured based on the first reference signal resource configuration information is for obtaining a data set for performing model training on an AI model.

For beneficial effect of the fifth aspect and the implementations of the fifth aspect, refer to the descriptions of the second aspect.

For example, the AI model is for beam management.

For example, the first reference signal resource configuration information may be carried in one or more of the following fields: a CSI report configuration field, a CSI resource configuration field, a CSI-RS resource set field, or a CSI-RS resource set list field.

With reference to the fifth aspect, in some implementations of the fifth aspect, the first indication information further indicates that the first reference signal resource is for obtaining a label of performing model training on the AI model.

With reference to the fifth aspect, in some implementations of the fifth aspect, the first reference signal resource configuration information further includes fifth indication information, and the fifth indication information indicates that the first reference signal resource is for obtaining a label of performing model training on the AI model.

With reference to the fifth aspect, in some implementations of the fifth aspect, the method further includes: The network device sends third reference signal resource configuration information to the terminal device. The third reference signal resource configuration information includes sixth indication information, and the sixth indication information indicates that a third reference signal resource configured based on the third reference signal resource configuration information is for obtaining input information of performing model training on the AI model.

With reference to the fifth aspect, in some implementations of the fifth aspect, the first reference signal resource configuration information further includes seventh indication information indicative of an association relationship between the first reference signal resource and the third reference signal resource; or the third reference signal resource configuration information further includes eighth indication information indicative of an association relationship between the first reference signal resource and the third reference signal resource.

For example, the third reference signal resource corresponds to an SSB resource, and the first reference signal resource corresponds to a CSI-RS resource.

With reference to the fifth aspect, in some implementations of the fifth aspect, the method further includes: The network device receives first information from the terminal device. The first information is for requesting to perform model training based on the AI model, and the first information includes one or more of the following: an identifier of the AI model, computing power information of the terminal device, sparse beam indication information, or a training mechanism of the AI model.

According to a sixth aspect, a communication method is provided. The method may be performed by a network device, or may be performed by a component (for example, a chip or a circuit) of a network device. This is not limited herein.

The method includes: The network device sends first reference signal resource configuration information to a terminal device. The first reference signal resource configuration information includes first indication information, and the first indication information indicates that a first reference signal resource configured based on the first reference signal resource configuration information is for performing model inference on an AI model, or the first indication information indicates that a first reference signal resource configured based on the first reference signal resource configuration information is for obtaining a data set for performing model inference on an AI model.

For beneficial effect of the sixth aspect and the implementations of the sixth aspect, refer to the descriptions of the third aspect.

For example, the AI model is for beam management.

For example, the first reference signal resource configuration information may be carried in one or more of the following fields: a CSI report configuration field, a CSI resource configuration field, a CSI-RS resource set field, or a CSI-RS resource set list field.

With reference to the sixth aspect, in some implementations of the sixth aspect, the method further includes: The network device sends second reference signal resource configuration information to the terminal device. The second reference signal resource configuration information includes second indication information, and the second indication information indicates that a second reference signal resource configured based on the second reference signal resource configuration information is for performing model training on the AI model, or the second indication information indicates that a second reference signal resource configured based on the second reference signal resource configuration information is for obtaining a data set for performing model training on the AI model.

With reference to the sixth aspect, in some implementations of the sixth aspect, the first reference signal resource configuration information further includes third indication information indicative of an association relationship between the first reference signal resource and the second reference signal resource; or the second reference signal resource configuration information further includes fourth indication information indicative of an association relationship between the second reference signal resource and the first reference signal resource.

With reference to the sixth aspect, in some implementations of the sixth aspect, the first reference signal resource is a reference signal resource corresponding to input information for model inference of the AI model; and the first reference signal resource configuration information further includes first identifier information. The first identifier information corresponds to a target reference signal resource set, and the target reference signal resource set includes a reference signal resource corresponding to a label in a model training process of the AI model.

For example, the first identifier information includes a sequence number of the target reference signal resource set in a first target reference signal resource set group, the first target reference signal resource set group is a reference signal resource set group configured for a plurality of cells or a plurality of network devices, the plurality of network devices include the network device accessed by the terminal device, and the plurality of cells include a cell in which the terminal device runs the AI model in the network device accessed by the terminal device.

With reference to the sixth aspect, in some implementations of the sixth aspect, the method further includes: The network device sends fifth reference signal resource configuration information to the terminal device. The fifth reference signal resource configuration information is for configuring the target reference signal resource set, the fifth reference signal resource configuration information includes the first identifier information, the fifth reference signal resource configuration information further includes second identifier information, and the second identifier information corresponds to the target reference signal resource set.

For example, the second identifier information includes a sequence number of the target reference signal resource set in a first target reference signal resource set group, the first target reference signal resource set group is a reference signal resource set group configured for a plurality of cells or a plurality of network devices, the plurality of network devices include the network device accessed by the terminal device, and the plurality of cells include a cell in which the terminal device runs the AI model in the network device accessed by the terminal device. The first identifier information includes a sequence number of the target reference signal resource set in a second target reference signal resource set group, and the second target reference signal resource set group is a reference signal resource set group configured for the cell in which the terminal device runs the AI model.

With reference to the sixth aspect, in some implementations of the sixth aspect, the method further includes: The network device receives first information from the terminal device. The first information is for requesting to perform model inference on the AI model, and the first information includes one or more of the following: an identifier of the AI model, indication information #1, or sparse beam indication information. The indication information #1 indicates that training of the AI model is completed.

According to a seventh aspect, a communication apparatus is provided. The apparatus is configured to perform the method according to any one of the first aspect to the sixth aspect. Specifically, the apparatus may include a unit and/or a module configured to perform the method according to any one of the implementations of any one of the first aspect to the sixth aspect, for example, a processing unit and/or a transceiver unit. The communication apparatus may be a terminal device or a network device.

In an implementation, the apparatus is a communication device. When the apparatus is the communication device, the transceiver unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a communication device. When the apparatus is the chip, the chip system, or the circuit used in the communication device, the transceiver unit may be an input/output interface, an interface circuit, an output circuit, an input circuit, a pin, a related circuit, or the like in the chip, the chip system, or the circuit; and the processing unit may be at least one processor, a processing circuit, a logic circuit, or the like.

According to an eighth aspect, a communication apparatus is provided. The apparatus includes: a memory, configured to store a program; and at least one processor, configured to execute a computer program or instructions stored in the memory, to perform the method according to any one of the implementations of any one of the first aspect to the sixth aspect. The communication apparatus may be a terminal device or a network device.

In an implementation, the apparatus is a communication device.

In another implementation, the apparatus is a chip, a chip system, or a circuit used in a communication device.

According to a ninth aspect, this application provides a processor, configured to perform the method provided in the foregoing aspects.

Operations such as sending and obtaining/receiving related to the processor may be understood as operations such as output and input of the processor, or sending and receiving operations performed by a radio frequency circuit and an antenna, unless otherwise specified, or provided that the operations do not contradict actual functions or internal logic of the operations in related descriptions. This is not limited in this application.

According to a tenth aspect, a computer-readable storage medium is provided. The computer-readable medium stores program code to be executed by a device, and the program code is used to perform the method according to any one of the implementations of any one of the first aspect to the sixth aspect.

According to an eleventh aspect, a computer program product including instructions is provided. When the computer program product runs on a computer, the computer is caused to perform the method according to any one of the implementations of any one of the first aspect to the sixth aspect.

According to a twelfth aspect, a chip is provided. The chip includes a processor and a communication interface. The processor reads, through the communication interface, instructions stored in a memory, to perform the method according to any one of the implementations of any one of the first aspect to the sixth aspect.

Optionally, in an implementation, the chip further includes the memory. The memory stores a computer program or instructions. The processor is configured to execute the computer program or the instructions stored in the memory. When the computer program or the instructions are executed, the processor is configured to perform the method according to any one of the implementations of any one of the first aspect to the sixth aspect.

According to a thirteenth aspect, a communication system is provided, including the foregoing terminal device and/or network device.

## BRIEF DESCRIPTION OF DRAWINGS

FIG. 1 is a diagram of a wireless communication system 100 applicable to an embodiment of this application;

FIG. 2 is a diagram of a structure of a neuron;

FIG. 3 is a diagram of a layer relationship of a neural network;

FIG. 4 is a diagram of a framework of AI model training and inference according to this application;

FIG. 5 is a diagram of a wide beam and a narrow beam applicable to an embodiment of this application;

FIG. 6 is a schematic flowchart of a communication method 600 according to an embodiment of this application;

FIG. 7 is a schematic flowchart of a communication method 700 according to another embodiment of this application;

FIG. 8 is a schematic flowchart of a communication method 800 according to still another embodiment of this application;

FIG. 9 is a schematic flowchart of a communication method 900 according to yet another embodiment of this application;

FIG. 10 is a diagram of a communication apparatus 1000 according to an embodiment of this application;

FIG. 11 is a diagram of another communication apparatus 1100 according to an embodiment of this application; and

FIG. 12 is a diagram of a chip system 1200 according to an embodiment of this application.

## DESCRIPTION OF EMBODIMENTS

The following describes technical solutions of embodiments in this application with reference to accompanying drawings.

The technical solutions provided in this application can be applied to various communication systems, for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system such as a 6th generation mobile communication system, or a converged system of a plurality of systems. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

A terminal device in embodiments of this application includes various devices having a wireless communication function, and the terminal device may be configured to be connected to a person, an object, a machine, and the like. The terminal device may be widely used in various scenarios, such as cellular communication, D2D, V2X, peer-to-peer (peer-to-peer, P2P), M2M, MTC, IoT, virtual reality (virtual reality, VR), augmented reality (augmented reality, AR), industrial control, automated driving, telemedicine, a smart grid, smart furniture, a smart office, smart wearable, smart transportation, a smart city, an uncrewed aerial vehicle, a robot, remote sensing, passive sensing, positioning, navigation and tracking, and autonomous delivery. The terminal device may be a terminal in any one of the foregoing scenarios, such as an MTC terminal or an IoT terminal. The terminal device may be a user equipment (user equipment, UE) in a 3rd generation partnership project (3rd generation partnership project, 3GPP) standard, a terminal (terminal), a fixed device, a mobile station (mobile station) device or a mobile device, a subscriber unit (subscriber unit), a handheld device, a vehicle-mounted device, a wearable device, a cellular phone (cellular phone), a smartphone (smartphone), a session initiation protocol (session initialization protocol, SIP) phone, a wireless data card, a personal digital assistant (personal digital assistant, PDA), a computer, a tablet computer, a notebook computer, a wireless modem, a handheld device (handset), a laptop computer (laptop computer), a computer having a wireless transceiver function, a smart book, a vehicle, a satellite, a global positioning system (global positioning system, GPS) device, a target tracking device, a flight device (for example, an uncrewed aerial vehicle, a helicopter, a multi-helicopter, a four-helicopter, or an airplane), a ship, a remote control device, a smart home device, or an industrial device; an apparatus built in the foregoing device (for example, a communication module, a modem, or a chip in the foregoing device); or another processing device connected to a wireless modem. For ease of description, an example in which the terminal device is a terminal or UE is used below for description.

It should be understood that, in some scenarios, the UE may be further used as a base station. For example, the UE may act as a scheduling entity that provides a sidelink signal between UEs in a scenario such as V2X, D2D, or P2P.

In embodiments of this application, an apparatus configured to implement a function of the terminal device may be a terminal device, or may be an apparatus that can support the terminal device in implementing the function, for example, a chip system or a chip. The apparatus may be installed in the terminal device. In embodiments of this application, the chip system may include a chip, or may include a chip and another discrete component.

A network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover various names in the following in a broad sense, or may be alternatively be the following names, such as a NodeB (NodeB), an evolved NodeB (evolved NodeB, eNB), a next generation NodeB (next generation NodeB, gNB), a relay station, an access point, a transmitting and receiving reception point (transmitting and receiving point, TRP), a transmitting point (transmitting point, TP), a primary station, a secondary station, a motor slide retainer (motor slide retainer, MSR) node, a home base station, a network controller, an access node, a wireless node, an access point (AP), a transmission node, a transceiver node, a baseband unit (BBU), a remote radio unit (remote radio unit, RRU), an active antenna unit (active antenna unit, AAU), a radio-frequency head (remote radio head, RRH), a central unit (central unit, CU), a distributed unit (distributed unit, DU), a positioning node, and the like. The base station may be a macro base station, a micro base station, a relay node, a donor node, or the like, or a combination thereof. The base station may alternatively be a communication module, a modem, or a chip arranged in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks using a same access technology or different access technologies. A specific technology and a specific device form that are used for the network device are not limited in embodiments of this application.

The base station may be fixed or mobile. For example, a helicopter or an uncrewed aerial vehicle may be configured as a mobile base station, and one or more cells may move based on a location of the mobile base station. In another example, a helicopter or an uncrewed aerial vehicle may be configured as a device for communicating with another base station.

In embodiments of this application, an apparatus configured to implement a function of the network device may be a network device, or may be an apparatus that can support the network device in implementing the function, for example, a chip system or a chip. The apparatus may be installed on the network device. In embodiments of this application, the chip system may include a chip, or may include a chip and another discrete component.

The network device and the terminal device may be deployed on land, including an indoor or outdoor device, a handheld device, or a vehicle-mounted device; may be deployed on a water surface; or may be deployed on an airplane, a balloon, and a satellite in air. A scenario in which the network device and the terminal device are located is not limited in embodiments of this application. In addition, each of the terminal device and the network device may be a hardware device, a software function running on dedicated hardware, a software function running on general-purpose hardware, for example, a virtualization function instantiated on a platform (for example, a cloud platform), or an entity including a dedicated or general-purpose hardware device and a software function. Specific forms of the terminal device and the network device are not limited in this application.

A communication system applicable to embodiments of this application is first briefly described below.

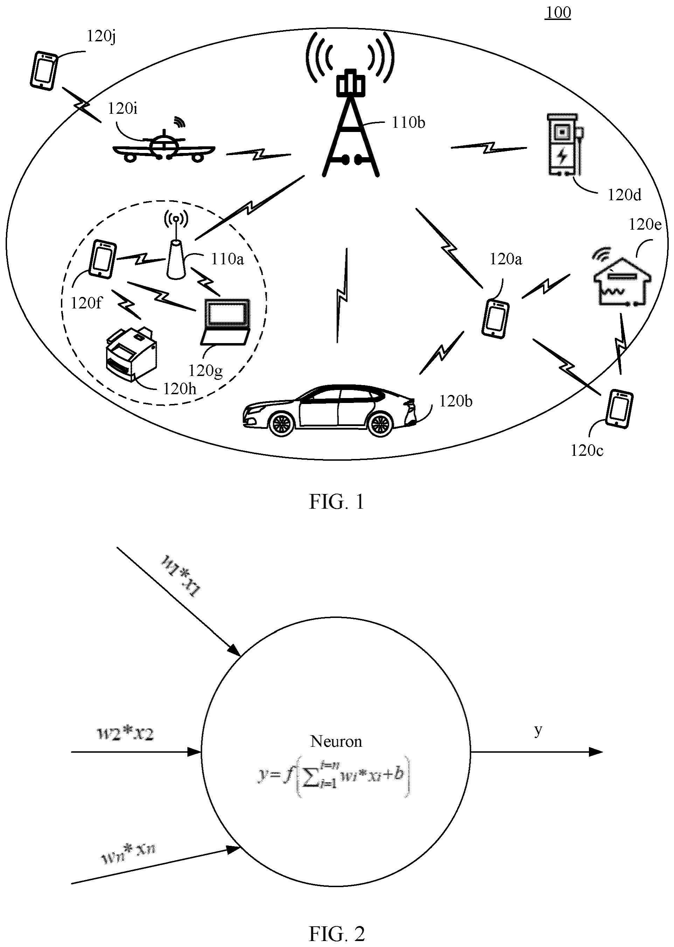

FIG. 1 is a diagram of a wireless communication system 100 applicable to an embodiment of this application. As shown in FIG. 1, the wireless communication system includes a radio access network 100. The radio access network 100 may be a next generation (for example, 6G or a higher version) radio access network, or a conventional (for example, 5G, 4G, 3G, or 2G) radio access network. One or more terminal devices (120a to 120j, which are collectively referred to as 120) may be interconnected or connected to one or more network devices (110a and 110b, which are collectively referred to as 110) in the radio access network 100. FIG. 1 is only a diagram. The wireless communication system may further include another device, for example, may further include a core network device, a wireless relay device, and/or a wireless backhaul device, which are not shown in FIG. 1.

In an actual application, the wireless communication system may include a plurality of network devices (also referred to as access network devices), and may also include a plurality of terminal devices. This is not limited. One network device may serve one or more terminal devices. One terminal device may also access one or more network devices. Quantities of terminal devices and network devices included in the wireless communication system are not limited in embodiments of this application.

The communication system may further include a network element having an artificial intelligence function. A phase related to AI model design, for example, one or more of a data collection phase (for example, collection of training data and/or inference data), a model training phase, and a model inference phase, may be performed by one or more network elements having an artificial intelligence function. In a possible design, the AI function (for example, an AI module or an AI entity) may be configured in an existing network element in the communication system, to implement an AI-related operation, for example, AI model training and/or inference. For example, the existing network element may be an access network device (for example, a gNB), a terminal device, a core network device, a network management system, or the like. The network management system can detect a network running status, optimize network connections and performance, improve network running stability, and reduce network maintenance costs. Alternatively, in another possible design, an independent network element may be introduced into the communication system to perform an AI-related operation, for example, AI model training. The independent network element may be referred to as an AI network element, an AI node, or the like. The name is not limited in this disclosure. The AI network element may be directly connected to the access network device in the communication system, or may be indirectly connected to the access network device via a third-party network element. The third-party network element may be a core network device, for example, an authentication management function (authentication management function, AMF) network element or a user plane function (user plane function, UPF) network element, a network management system, a cloud server, or another network element. This is not limited. Optionally, the AI network element may be a hardware device, a software function running on dedicated hardware, a software function running on general-purpose hardware, for example, a virtualization function instantiated on a platform (for example, a cloud platform), or an entity including a dedicated or general-purpose hardware device and a software function. Optionally, the AI network element may be located in a server, for example, located in a host or a cloud server of an OTT system.

In this disclosure, one parameter or a plurality of parameters may be obtained through inference based on one model. Training processes for different models may be deployed on different devices or nodes, or may be deployed on a same device or node. Inference processes for different models may be deployed on different devices or nodes, or may be deployed on a same device or node. This is not limited in this disclosure.

This disclosure relates to model processing or operation, for example, model training or model inference. Optionally, model training includes one or more of model initial training, retraining, model updating, model performance verification or monitoring, and the like.

For ease of understanding embodiments of this application, the following first briefly describes terms in embodiments of this application.

1. Artificial intelligence (artificial intelligence, AI): AI enables machines to have learning capabilities, accumulate experience, and resolve problems such as natural language understanding, image recognition, and chess playing that can be resolved by humans through experience. The artificial intelligence may be understood as intelligence represented by a machine made by a person. Generally, the artificial intelligence is a technology that presents human intelligence by using a computer program. An objective of the artificial intelligence includes understanding intelligence by building symbolic reasoning or computer programs for reasoning.

2. Machine learning (machine learning): Machine learning is an implementation of artificial intelligence. Machine learning may be divided into supervised learning, unsupervised learning, and reinforcement learning.

In terms of supervised learning, based on collected sample values and sample labels, a mapping relationship between the sample values and the sample labels is learned by using a machine learning algorithm, and the learned mapping relationship is expressed by using a machine learning model. A process of training a machine learning model is a process of learning the mapping relationship. For example, in signal detection, a received signal including noise is a sample, and an actual constellation corresponding to the signal is a label. In terms of machine learning, it is expected to learn a mapping relationship between a sample and a label through training, that is, enable a machine learning model to learn a signal detector. During training, a model parameter is optimized by calculating an error between a predicted value of a model and an actual label. Once the mapping relationship is learned, a sample label of each new sample can be predicted by using the learned mapping relationship. The mapping relationship learned through supervised learning may include linear mapping and non-linear mapping. A learning task may be classified into a classification task and a regression task based on a type of a label.

In terms of unsupervised learning, an internal pattern of a sample is explored autonomously by using an algorithm based on a collected sample value. For a specific type of algorithm of unsupervised learning, a sample is used as a supervised signal, in other words, a model learns a mapping relationship between samples, which is referred to as self-supervised learning. During training, a model parameter is optimized by calculating an error between a predicted value of the model and the sample. Self-supervised learning may be used for signal compression and decompression restoration. Common algorithms include an autoencoder, a generative adversarial network, and the like.

Reinforcement learning is different from supervised learning, and is an algorithm that learns a strategy of resolving problems by interacting with an environment. Different from supervised learning and unsupervised learning, reinforcement learning does not have clear "correct" action label data. The algorithm needs to interact with the environment to obtain a reward signal fed back by the environment and adjust a decision action to obtain a larger reward signal value. For example, in downlink power control, a reinforcement learning model adjusts downlink transmit power of each user based on a total system throughput fed back by a wireless network, to expect to obtain a higher system throughput. The goal of reinforcement learning is also to learn a mapping relationship between an environment status and an optimal decision action. However, a label of "correct action" cannot be obtained in advance. Therefore, a network cannot be optimized by calculating an error between an action and the "correct action". Reinforcement learning training is implemented through iterative interaction with the environment.

In addition, deep learning is also an important branch of machine learning. Based on the foregoing learning algorithm, deep learning uses a neural network architecture to establish a mapping relationship between input data and a network output. According to the universal approximation theorem, a neural network can approximate any continuous function in theory, so that the neural network has a capability of learning any mapping. In a conventional communication system, a communication module needs to be designed with rich expert knowledge. However, a deep learning-based communication system can automatically discover an implicit pattern structure from a large quantity of data sets, establish a mapping relationship between data, and obtain performance better than that of a conventional modeling method.

A deep learning algorithm may be generally divided into two main phases: a training phase and an inference phase. In the training phase, a large amount of data is required for the network to learn a mapping relationship between an input and an output. Therefore, quality of training data directly affects performance of an AI algorithm. After training is completed, the deep learning algorithm is used in the inference phase to infer a corresponding output result based on input data.

3. Neural network: A neural network is a specific embodiment of a machine learning method. The neural network is a mathematical model that imitates an animal neural network behavior feature and processes information. An idea of the neural network comes from a neuron structure of brain tissue. Each neuron may perform a weighted summation operation on input values of the neuron, and outputs, through an activation function, a result obtained through the weighted summation operation.

FIG. 2 is a diagram of a structure of a neuron. As shown in FIG. 2, it is assumed that an input of the neuron is $x = [x_1, x_2,...,x_n]$, weights corresponding to the inputs are respectively $w = [w_1, w_2,...,w_n]$, and an offset of weighted summation is b. b may be an integer, may be a decimal, or may be various possible values such as a complex number. A form of an activation function may be diversified. In an example, it is assumed that an activation function of a neuron is $y = f(z) = \max(0, z)$, an output of the neuron is $y = f(\sum_{i=1}^{i=n} w_i * x_i + b) = \max(0, \sum_{i=1}^{i=n} w_i * x_i + b)$. In another example, it is assumed that an activation function of a neuron is $y=f(z)=z$, an output of the neuron is $y = f(\sum_{i=1}^{i=n} w_i * x_i + b) = \sum_{i=1}^{i=n} w_i * x_i + b$, as shown in FIG. 2. Activation functions of different neurons in a neural network may be the same or different.

The neural network usually includes a multi-layer structure, and each layer may include one or more logical judging units. The logical judging unit may be referred to as a neuron (neuron). A depth and/or a width of the neural network are/is increased, so that an expression capability of the neural network can be improved, and more powerful information extraction and abstraction modeling capabilities can be provided for a complex system. The depth of the neural network may be understood as a quantity of layers included in the neural network, and a quantity of neurons included in each layer may be referred to as a width of the layer.

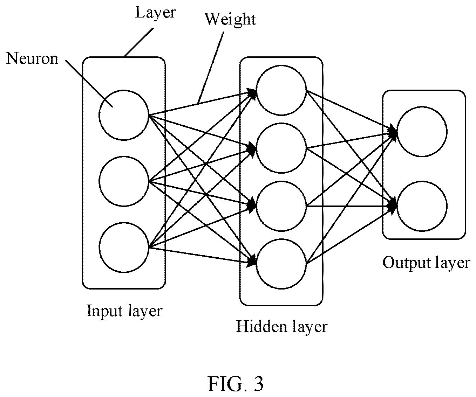

FIG. 3 is a diagram of a layer relationship of a neural network.

In a possible implementation, the neural network includes an input layer and an output layer. The input layer of the neural network performs neuron processing on a received input, and then transfers a result to the output layer. The output layer obtains an output result of the neural network.

In another possible implementation, the neural network includes an input layer, a hidden layer, and an output layer, as shown in FIG. 3. The input layer of the neural network performs neuron processing on a received input, and then transfers a result to an intermediate hidden layer. The hidden layer transfers a calculation result to the output layer or an adjacent hidden layer. Finally, the output layer obtains an output result of the neural network. One neural network may include one hidden layer or a plurality of hidden layers that are connected in sequence. This is not limited.

A loss function may be defined in a training process of the neural network. The loss function is used to measure a difference between a predicted value and an actual value of a model. In the training process of the neural network, the loss function describes a gap or a difference between an output value and an ideal target value of the neural network. The training process of the neural network is a process of adjusting a neural network parameter, to make a value of the loss function be less than a threshold or satisfy a target requirement. The neural network parameter may include at least one of the following: a quantity of layers of the neural network, a width of the neural network, a weight of a neuron, or a parameter in an activation function of the neuron.

4. AI model: An AI model is an algorithm or a computer program that can implement an AI function. The AI model represents a mapping relationship between an input and an output of the model, or the AI model is a function model that maps an input of a specific dimension to an output of a specific dimension. A parameter of the function model may be obtained through machine learning training. For example, $f(x)=ax2+b$ is a quadratic function model, and may be considered as an AI model. a and b are parameters of the AI model, and a and b may be obtained through machine learning training. For example, the AI model mentioned in the following embodiments of this application is not limited to a neural network, a linear regression model, a decision tree model, a support vector machine (support vector machine, SVM), a Bayesian network, a Q-learning model, or another machine learning (machine learning, ML) model.

It can be understood that the AI model may be implemented by using a hardware circuit, software, or a combination of software and hardware. This is not limited. A non-limiting example of the software includes program code, a program, a subprogram, instructions, an instruction set, code, a code segment, a software module, an application, a software application, or the like.

5. AI model training and AI model inference

Any AI model needs to be trained before being used to resolve a specific technical problem.

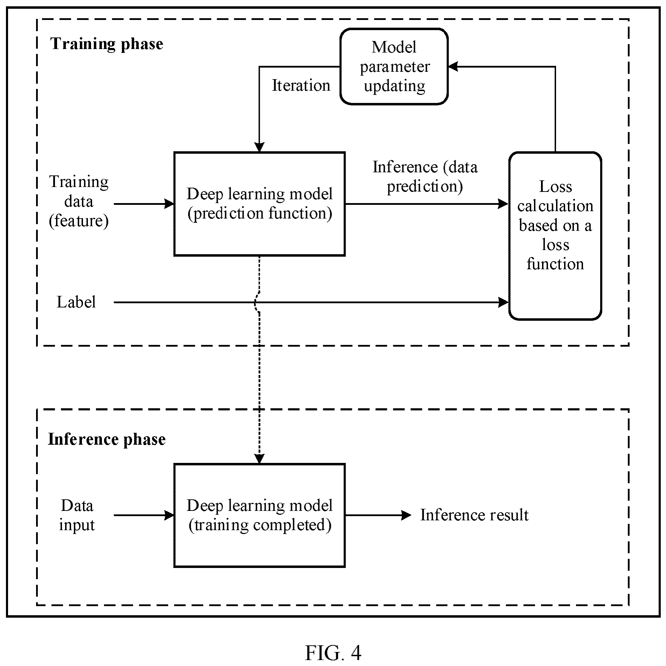

As shown in FIG. 4, AI model training is a process of calculating training data by using a specified initial model, and adjusting a parameter in the initial model by using a specific method based on a calculation result, so that the model gradually learns a specific rule and has a specific function. After training, an AI model with a stable function can be used for inference. AI model inference is a process of calculating input data by using a trained AI model to obtain a predicted inference result.

In a training phase, a training set for a deep learning model first needs to be constructed based on an objective. The training set includes a plurality of pieces of training data, and a label is set for each piece of training data. The label of the training data is a correct answer of the training data to a specific question, and the label may represent an objective of training the deep learning model by using the training data.

When the deep learning model is trained, the training data may be input in batches into a deep learning model obtained after parameter initialization, and the deep learning model performs calculation (namely, "inference") on the training data to obtain a prediction result for the training data. The prediction result obtained through inference and the label corresponding to the training data are used as data for calculating a loss based on a loss (loss) function. The loss function is a function used to calculate, in a model training phase, a difference (namely a "loss value") between a prediction result of a model for training data and a label of the training data. The loss function may be implemented by using different mathematical functions. Common expressions of the loss function include a mean square error loss function, a logarithmic loss function, a least square method, and the like. Model training is a process of repeated iterations. In each iteration, different training data is inferred and a loss value is calculated. An objective of a plurality of iterations is to continuously update parameters of the deep learning model and find a parameter configuration that minimizes or gradually stabilizes the loss value of the loss function.

6. Training data set and inference data

A training data set is used to train an AI model. The training data set may include an input of the AI model, or include the input of the AI model and a target output of the AI model. The training data set includes one or more pieces of training data. The training data may be a training sample input into the AI model, or may be the target output of the AI model. The target output may also be referred to as a label or a label sample. The training data set is one of important parts of machine learning. In essence, model training is to learn some features from the training data, so that an output of the AI model is as close as possible to the target output, for example, a difference between the output of the AI model and the target output is minimized. Composition and selection of the training data set can determine performance of a trained AI model to some extent. The performance of the model may be measured by, for example, a "loss value" or "inference accuracy".

In addition, a loss function may be defined in a training process of the AI model (for example, a neural network). The loss function describes a gap or difference between an output value of the AI model and a target output value. A specific form of the loss function is not limited in this application. The training process of the AI model is a process in which a model parameter of the AI model is adjusted, so that a value of the loss function is less than a threshold, or a value of the loss function meets a target requirement. For example, the AI model is a neural network, and adjusting a model parameter of the neural network includes adjusting at least one of the following parameters: a quantity of layers of the neural network, a width of the neural network, a weight of a neuron, or a parameter in an activation function of the neuron.

Inference data may be used as an input of a trained AI model and used for inference of the AI model. During model inference, the inference data is input into the AI model, to obtain a corresponding output, namely, an inference result.

7. Beam: A beam is a communication resource. The beam in an NR protocol may be a spatial filter (spatial filter), a spatial filter (spatial filter), or a spatial parameter (spatial parameter). A beam used to send a signal may be referred to as a transmit beam (transmission beam, Tx beam), or may be referred to as a spatial transmit filter (spatial domain transmit filter) or a spatial transmit parameter (spatial domain transmit parameter). A beam used to receive a signal may be referred to as a receive beam (reception beam, Rx beam), or may be referred to as a spatial receive filter (spatial domain receiver filter) or a spatial receive parameter (spatial domain receive parameter).

The transmit beam may refer to signal strength distribution formed in different directions in space after a signal is transmitted through an antenna, and the receive beam may refer to signal strength distribution in different directions in space of a radio signal received from an antenna.

It should be understood that the foregoing listed representation of the beam in the NR protocol is merely an example, and shall not constitute any limitation on this application. This application does not exclude a possibility that other terms are defined in a future protocol to indicate same or similar meanings.

In addition, the beam may be a wide beam, a narrow beam, or a beam of another type. A technology for forming the beam may be a beamforming technology or another technology. The beamforming technology may be specifically considered as different resources. Same information or different information may be sent through different beams.

For example, when a low band or an intermediate band is used, a signal may be sent omnidirectionally or at a wide angle. When a high band is used, because of a small carrier wavelength of a high-frequency communication system, antenna arrays including a plurality of antenna elements may be disposed at a transmitting end and a receiving end. The transmitting end sends a signal by using a specific beamforming weight, to enable the sent signal to form a spatially directional beam, and the receiving end receives the signal through the antenna array by using a specific beamforming weight, so that receive power of the signal at the receiving end can be increased, and a path loss can be avoided.

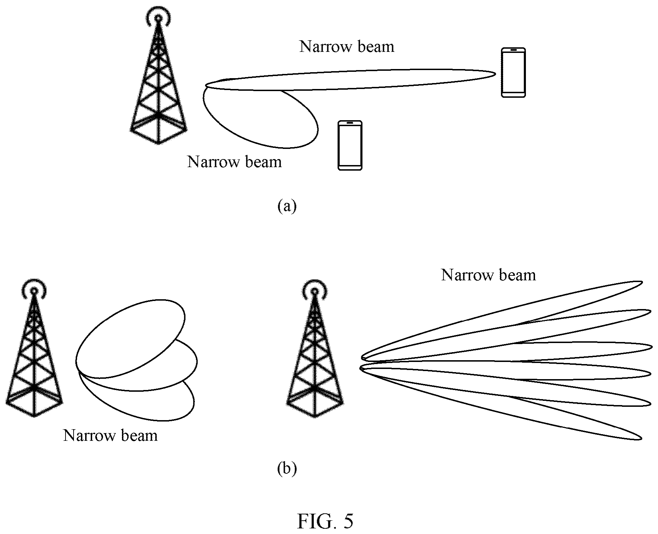

FIG. 5 is a diagram of a wide beam and a narrow beam applicable to an embodiment of this application. As shown in (a) in FIG. 5, a network device and a terminal device may communicate with each other by using a wide beam, or may communicate with each other by using a narrow beam. As shown in (b) in FIG. 5, a narrow beam has similar spotlight effect, and converges limited transmission energy in a narrow direction, to greatly increase a coverage of a network device.

8. Beam sweeping: Beam sweeping means that in a specific periodicity or time period, a beam is transmitted in a predefined direction at a fixed periodicity, to cover a specific spatial area. For example, during initial access, UE needs to synchronize with a system and receive minimum system information. Therefore, a bearer synchronization signal and physical broadcast channel (physical broadcast channel, PBCH) block (synchronization signal and PBCH block, SSB) is used to perform sweeping and sending at a fixed periodicity. A channel state information reference signal (channel state information reference signal, CSI-RS) may also use the beam sweeping technology. However, if all predefined beam directions need to be covered, overheads of the CSI-RS are excessively high. In this case, the CSI-RS is transmitted only in a specific subset of the predefined beam directions based on a location of a served terminal device.

9. Beam measurement: Beam measurement is a process in which a network device or a terminal device measures quality and a feature of a received beamformed signal. In a beam management process, the terminal device or the network device may obtain information such as reference signal received power (reference signal received power, RSRP), reference signal received quality (reference signal received quality, RSRQ), and a signal to interference plus noise ratio (signal to interference plus noise ratio, SINR) by using an SSB and a CSI-RS, to identify an optimal beam.

10. Beam management: An appropriate beam pair is established and maintained between the network device and the terminal device. For downlink transmission, a network side needs to select an appropriate transmit beam, and a terminal side needs to select an appropriate receive beam, to jointly form a beam pair to maintain a good wireless connection. The foregoing beam selection process may also be referred to as serving beam selection.

Currently, beam selection is mainly completed based on a reference signal and corresponding beam measurement. Specifically, the network side configures a reference signal resource for the terminal side based on a user capability and a network resource. After a configuration is completed, the network side sends a reference signal to the terminal side based on the configuration. The terminal side measures the reference signal and feeds back a measurement result to the network side. The network side configures the transmit beam based on the measurement result reported by the terminal.

Currently, in a process of beam management in combination with an AI model, the AI model may be deployed on a training device or the terminal device for training and updating. Further, after training of the AI model is completed, the terminal device may infer an optimal beam (there is one or more optimal beams) based on the trained AI model. However, how to balance performance and resource consumption of training the AI model and/or performing inference based on the trained AI model has not been resolved.

In view of this, this application provides a communication method. A terminal device may identify a purpose of a reference signal resource configured by a network device, so that the terminal device may perform model training or model inference based on the reference signal resource and the purpose of the reference signal resource. This helps balance performance and resource consumption of training an AI model and/or performing inference based on the AI model.

It should be noted that, in this application, an "indication" may include a direct indication, an indirect indication, an explicit indication, or an implicit indication. That a piece of indication information indicates A can be understood as follows: The indication information carries A, and may directly indicate A or indirectly indicate A. The indirect indication may mean that the indication information directly indicates B and a correspondence between B and A, to indicate A by using the indication information. The correspondence between B and A may be predefined in a protocol, prestored, or obtained by using a configuration between communication apparatuses.

In this application, information indicated by the indication information is referred to as to-be-indicated information. In a specific implementation process, there are many manners of indicating the to-be-indicated information. For example, the manners include but are not limited to a manner in which the to-be-indicated information, for example, the to-be-indicated information or an index of the to-be-indicated information, may be directly indicated. Alternatively, the to-be-indicated information may be indirectly indicated by indicating other information, where there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, the to-be-indicated information may be sent as a whole, or may be divided into a plurality of pieces of sub-information for sending separately; and sending periodicities and/or sending occasions of these pieces of sub-information may be the same or different.

It should be further noted that at least one (item) in this application indicates one (item) or more (items). "A plurality of (items)" means two (items) or more than two (items). The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. In addition, it should be understood that although the terms first, second, and the like may be used in this application to describe objects, these objects are not limited by these terms. These terms are merely used to distinguish the objects from each other.

The following describes in detail the method provided in embodiments of this application with reference to the accompanying drawings. Embodiments provided in this application may be applied to the communication system shown in FIG. 1. This is not limited.

It should be noted that a $k^{th}$ reference signal resource (for example, a first reference signal resource, a second reference signal resource, a third reference signal resource, and a fourth reference signal resource) in embodiments of this application may be replaced with a $k^{th}$ reference signal resource set, and the $k^{th}$ reference signal resource set includes at least one reference signal resource.

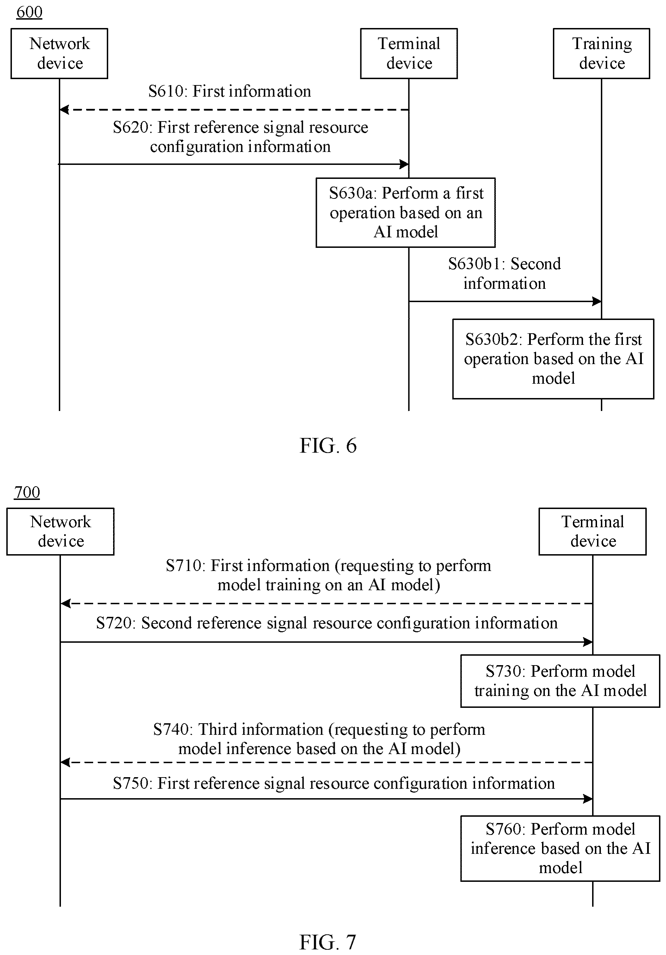

FIG. 6 is a schematic flowchart of a communication method 600 according to an embodiment of this application. The method 600 shown in FIG. 6 may include the following steps.

S610: A terminal device sends first information to a network device.

Correspondingly, in S610, the network device receives the first information from the terminal device.

The first information is for requesting to perform a first operation based on an AI model. The first operation is model training on the AI model or perform model inference based on the AI model. In a possible implementation, the first information is for requesting a reference signal resource for obtaining a data set, and the data set is a data set for performing the first operation based on the AI model.

For example, the AI model is for beam management.

For example, if the first operation is model training on the AI model, the first information may include one or more of the following: an identifier of the AI model, computing power information of the terminal device, sparse beam indication information, or a training mechanism of the AI model.

The identifier of the AI model is for identifying the AI model. If the first information includes the identifier of the AI model, the network device may identify, based on the identifier of the AI model, the AI model corresponding to the first operation requested by the terminal device. For example, if the terminal device supports requesting the network device to perform the first operation for a plurality of different AI models (for example, including an AI model #1 and an AI model #2), and the first information sent by the terminal device to the network device includes an identifier of the AI model #1, the network device may identify that the first operation requested by the terminal device corresponds to the AI model #1. It should be noted that if the terminal device supports requesting the network device to perform the first operation for one AI model, the first information may not include an identifier of the AI model.

The computing power information of the terminal device means information about a factor that may affect computing power of the terminal device. For example, the computing power information of the terminal device may include one or more of the following: a capability of a processor (for example, a central processing unit (center processing unit, CPU), a graphic processing unit (graphic processing unit, GPU), a tensor processing unit (tensor processing unit, TPU), a neural network processing unit (neural network processing unit, NPU), and a field-programmable gate array (field-programmable gate array, FPGA)) of the terminal device, a size of storage space of the terminal device, a size of a memory of the terminal device, power of the terminal device, and the like. If the first information includes the computing power information of the terminal device, the network device may identify, based on the computing power information of the terminal device, a capability that the terminal device supports model training of the AI model, for example, a batch size (batch size) of one training. It should be noted that, if the terminal device reports the computing power information of the terminal device to the network device before performing the method 600, or the computing power information of the terminal device is preconfigured on the network device, the first information may not include the computing power information of the terminal device.

At least one group of sparse beams indicated by the sparse beam indication information is a subset of all beams supported by the network device. All the beams supported by the network device are all beams that can be used by the network device. It may be understood that a quantity of all the beams supported by the network device may be fixed, or may have a plurality of values that respectively correspond to a plurality of application scenarios of the network device, for example, may be 16, 32, 64, or 128. In a scenario 1, a corresponding value is 64, and in a scenario 2, a corresponding value is 128. A quantity of all the beams supported by the network device may be predefined in a protocol, or may be configured by the network device for the terminal device or a training device. If the first information includes the sparse beam indication information, the network device may determine, based on the sparse beam indication information, the at least one group of sparse beams corresponding to the AI model. Further, in a process of performing model inference based on the AI model, the network device may configure a reference signal resource for the terminal device based on the at least one group of sparse beams. In this way, the terminal device can obtain, based on the reference signal resource configured by the network device, a measurement result of a reference signal corresponding to the at least one group of sparse beams, and the measurement result can be used as input information in a model inference process of the AI model. A group of sparse beams in the at least one group of sparse beams may also be referred to as a sparse beam pattern.

A form of the sparse beam indication information is not limited in embodiments of this application. For example, the sparse beam indication information indicates the at least one group of sparse beams by indicating an index of the at least one group of sparse beams. For another example, the sparse beam indication information indicates the at least one group of sparse beams by indicating a beam identifier of a beam included in each group of sparse beams.

It should be noted that the first information may not include the sparse beam indication information. For example, if the terminal device reports the sparse beam indication information to the network device before performing the method 600, or at least one group of sparse beams is preconfigured on the network device, the first information may not include the sparse beam indication information.

The training mechanism of the AI model means an algorithm corresponding to the AI model. For example, when the AI model is for beam management, the algorithm corresponding to the AI model may be a classification algorithm in which a beam identifier of an optimal beam is used as a training label, or the algorithm corresponding to the AI model may be a regression algorithm in which signal measurement results of reference signals corresponding to all the beams supported by the network device are used as training labels. When the algorithm corresponding to the AI model is the classification algorithm, and an output of the AI model is a probability that each beam in all the beams supported by the network device is an optimal beam. There are one or more optimal beams. When the algorithm corresponding to the AI model is the regression algorithm, an output of the AI model is signal measurement results of reference signals corresponding to all the beams supported by the network device. The signal measurement results of the reference signals may be one or more of RSRP, RSRQ, an SINR, or the like. It should be noted that, if the terminal device reports the training mechanism of the AI model to the network device before performing the method 600, or the training mechanism of the AI model is preconfigured on the network device, the first information may not include the training mechanism of the AI model.

For another example, if the first operation is model inference on the AI model, the first information may include one or more of the following: an identifier of the AI model, indication information #1, or sparse beam indication information. The indication information #1 indicates that training of the AI model is completed.

It should be noted that, if the AI model is deployed on the terminal device, in S610, the terminal device sends the first information to the network device. If the AI model is deployed on a training device different from the terminal device, in S610, the terminal device sends the first information to the network device, or the training device sends the first information to the network device. If the AI model is deployed on the training device, and the first information sent by the terminal device or the training device to the network device includes computing power information, the computing power information is computing power information of the training device.

It should be further noted that S610 is an optional step. For example, whether the terminal device or the training device performs the first operation based on the AI model is determined by the network device, and in this case, S610 may not be performed in the method 600.

S620: The network device sends the first reference signal resource configuration information to the terminal device.

Correspondingly, the terminal device receives the first reference signal resource configuration information from the network device.

The first reference signal resource configuration information may be carried in one or more of the following fields: a CSI report configuration (CSI-ReportConfig) field, a CSI resource configuration (CSI-ResourceConfig) field, a CSI-RS resource set (ResourceSet) field, or a CSI-RS resource set list (ResourceSetList) field.

The first reference signal resource configuration information includes first indication information, where the first indication information indicates a purpose of a first reference signal resource configured based on the first reference signal resource configuration information. Correspondingly, the terminal device may determine the purpose of the first reference signal resource based on the first indication information. Alternatively, the first indication information indicates an operation (for example, the first operation based on the AI model) corresponding to the first reference signal resource. Correspondingly, the terminal device may determine, based on the first indication information, the operation corresponding to the first reference signal resource. For example, the first indication information indicates that the first reference signal resource is for performing the first operation based on the AI model. Alternatively, the first indication information indicates that the first reference signal resource is for obtaining a data set, and the data set is a data set for performing the first operation based on the AI model. Alternatively, the first indication information indicates that the first reference signal resource is for performing a non-AI-model-based operation.

In a possible implementation, the first reference signal resource configuration information may not include the first indication information. If the first reference signal resource configuration information does not include the first indication information, it indicates that the first reference signal resource configured based on the first reference signal resource configuration information is for performing the non-AI-model-based operation.

A specific form of the first indication information is not limited in embodiments of this application.

For example, the operation corresponding to the first reference signal resource, that is, the purpose of the first reference signal resource, may be indicated based on different values of the first indication information, correspondences between different operations based on the AI model, and a specific value of the first indication information.

For example, the first indication information is 1-bit (bit) information. If a value of the first indication information is "1", the first indication information indicates that the first reference signal resource is for performing model training on the AI model (that is, the first operation is model training on the AI model); or if a value of the first indication information is "0", the first indication information indicates that the first reference signal resource is for performing model inference on the AI model (that is, the first operation is model inference on the AI model). Alternatively, if a value of the first indication information is "0", the first indication information indicates that the first reference signal resource is for performing model training on the AI model (that is, the first operation is model training on the AI model); or if a value of the first indication information is "1", the first indication information indicates that the first reference signal resource is for performing model inference on the AI model (that is, the first operation is model inference on the AI model). It may be understood that this disclosure is described by using a plurality of values of the first indication information corresponding to a plurality of "first operations". Alternatively, when the plurality of values of the first indication information respectively correspond to a plurality of operations, the plurality of operations may also be respectively referred to as a first operation, a second operation, or the like. This is not limited herein.

For another example, the first indication information is 2-bit (bit) information. If a value of the first indication information is "00", the first indication information indicates that the first reference signal resource is for performing model training on the AI model (that is, the first operation is model training on the AI model); if a value of the first indication information is "01", the first indication information indicates that the first reference signal resource is for performing model inference on the AI model (that is, the first operation is model inference on the AI model); or if a value of the first indication information is "10", the first indication information indicates that the first reference signal resource is for performing the non-AI-model-based operation.

Optionally, the first reference signal resource configuration information further includes indication information #8, and the indication information #8 indicates the identifier of the AI model. Correspondingly, the terminal device may determine the identifier of the AI model based on the indication information #8, and then the terminal device determines that the first reference signal resource is for performing the first operation on the AI model identified by the identifier of the AI model.

Optionally, if the first operation is model inference on the AI model, the method 600 further includes: The network device sends second reference signal resource configuration information to the terminal device. Correspondingly, the terminal device receives the second reference signal resource configuration information from the network device. The second reference signal resource configuration information includes second indication information, and the second indication information indicates that a second reference signal resource configured based on the second reference signal resource configuration information is for performing model training on the AI model, or the second indication information indicates that a second reference signal resource is for obtaining a data set #1, and the data set #1 is a data set for performing model training on the AI model. For a specific form of the second indication information, refer to the descriptions of the specific form of the first indication information.

The second reference signal resource configuration information may be carried in one or more of the following fields: a CSI report configuration field, a CSI resource configuration field, a CSI-RS resource set field, or a CSI-RS resource set list field.

Optionally, the second reference signal resource configuration information further includes indication information #9, and the indication information #9 indicates the identifier of the AI model. Correspondingly, the terminal device may determine the identifier of the AI model based on the indication information #9, and then the terminal device determines that the second reference signal resource is for performing model training on the AI model identified by the identifier of the AI model.

Optionally, if the first operation is model inference on the AI model, the first reference signal resource is a reference signal resource corresponding to input information of model inference of the AI model, and the first reference signal resource configuration information further includes first identifier information. The first identifier information corresponds to a target reference signal resource set, and the target reference signal resource set includes a reference signal resource corresponding to a label in a model training process of the AI model. The reference signal resource corresponding to the label in the model training process of the AI model is denoted as a reference signal resource #1. A correspondence between the label in the model training process of the AI model and the reference signal resource #1 may be described as follows: The reference signal resource #1 is for obtaining the label in the model training process of the AI model. For more descriptions of the first identifier information, refer to the following method 900. For brevity, details are not described herein.

It should be understood that the target reference signal resource set means a reference signal resource set that includes the reference signal resource corresponding to the label in the model training process of the AI model. The target reference signal resource set has no other special meaning. The target reference signal resource set may alternatively be replaced with another name, for example, replaced with a reference signal resource set #A.

Optionally, if the first operation is model training on the AI model, the first indication information further indicates that the first reference signal resource is for obtaining a label of performing model training on the AI model.

For example, when the first indication information further indicates that the first reference signal resource is for obtaining the label of performing model training on the AI model, the first indication information may be 2-bit information. For example, if a value of the first indication information is "00", the first indication information indicates that the first reference signal resource is for obtaining the label of performing model training on the AI model. It may be understood that when the first indication information indicates that the first reference signal resource is for obtaining the label of performing model training on the AI model, the first indication information also indicates that the first reference signal resource is for performing the first operation based on the AI model, and the first operation is training the AI model. In other words, the first indication information is a field, and a value of the field corresponds to the first operation (that is, a first purpose) and a sub-purpose of the first operation.

For another example, when the first indication information further indicates that the first reference signal resource is for obtaining the label of performing model training on the AI model, the first indication information may be 2-bit information. For example, the first bit indicates that the first reference signal resource is for performing the first operation based on the AI model, and the second bit indicates whether the first reference signal resource is for obtaining the label of performing model training on the AI model. For example, if a value of the second bit is "0", the second bit indicates that the first reference signal resource is for obtaining the label of performing model training on the AI model. Alternatively, if a value of the second bit is "1", the second bit indicates that the first reference signal resource is for obtaining the label of performing model training on the AI model.

For another example, when the first indication information further indicates that the first reference signal is for obtaining the label of performing model training on the AI model, the first indication information may be 3-bit information. For example, the first two bits indicate that the first reference signal resource is for performing the first operation based on the AI model, and the third bit indicates whether the first reference signal resource is for obtaining the label of performing model training on the AI model. For example, if a value of the second bit is "0", the second bit indicates that the first reference signal resource is for obtaining the label of performing model training on the AI model. Alternatively, if a value of the second bit is "1", the second bit indicates that the first reference signal resource is for obtaining the label of performing model training on the AI model.

In other words, the first indication information includes two parts: a part 1 and a part 2. The part 1 indicates the first operation (that is, a first purpose), and the part 2 indicates a sub-purpose of the first operation. Optionally, a quantity of bits in the part 1 is 1 or 2, and a quantity of bits in the part 2 is 1. Optionally, the first operation is model training, and the sub-purpose of the first operation includes a label, an input, or an input and a label.

Optionally, if the first operation is model training on the AI model, the first reference signal resource configuration information further includes fifth indication information, and the fifth indication information indicates that the first reference signal resource is for obtaining the label of performing model training on the AI model. Alternatively, the fifth indication information indicates that the first reference signal resource is for obtaining an input, or an input and a label of performing model training on the AI model. In other words, a plurality of values of the fifth indication information separately indicate that the first reference signal resource is for obtaining a label, an input, or an input and a label of performing model training on the AI model.

For example, the fifth indication information may be 1-bit information. For example, if a value of the fifth indication information is "0", the fifth indication information indicates that the first reference signal resource is for obtaining the label of performing model training on the AI model. Alternatively, if a value of the fifth indication information is "1", the fifth indication information indicates that the first reference signal resource is for obtaining the label of performing model training on the AI model.

Optionally, if the first indication information further indicates that the first reference signal resource is for obtaining the label of performing model training on the AI model, or the first reference signal resource configuration information further includes the fifth indication information, and the fifth indication information indicates that the first reference signal resource is for obtaining the label of performing model training on the AI model, the method 600 further includes: The network device sends third reference signal resource configuration information to the terminal device, and correspondingly, the terminal device receives the third reference signal resource configuration information from the network device.

For example, the first reference signal resource configured based on the first reference signal resource configuration information corresponds to a CSI-RS resource, or the first reference signal resource is for transmitting a CSI-RS. A third reference signal resource configured based on the third reference signal resource configuration information corresponds to an SSB resource, or the third reference signal resource is for transmitting an SSB.

For example, reference signals transmitted on the first reference signal resource configured based on the first reference signal resource configuration information correspond to all narrow beams supported by the network device, and all the narrow beams supported by the network device are denoted as a narrow beam universal set. Reference signals transmitted on the third reference signal resource configured based on the third reference signal resource configuration information correspond to all wide beams supported by the network device, and all the wide beams supported by the network device are denoted as a wide beam universal set.

The third reference signal resource configuration information may be carried in one or more of the following fields: a CSI report configuration field, a CSI resource configuration field, a CSI-RS resource set field, or a CSI-RS resource set list field.

The third reference signal resource configuration information includes sixth indication information, and the sixth indication information indicates that a third reference signal resource configured based on the third reference signal resource configuration information is for obtaining input information of performing model training on the AI model.

For example, the sixth indication information may be 2-bit information. For example, if a value of the sixth indication information is "01", the sixth indication information indicates that the third reference signal resource is for obtaining the input information of performing model training on the AI model. It may be understood that when the sixth indication information indicates that the third reference signal resource is for obtaining the input information of performing model training on the AI model, the sixth indication information also indicates that the third reference signal resource is for performing the first operation based on the AI model, and the first operation is training the AI model.

For another example, the sixth indication information may be 1-bit information. For example, if a value of the sixth indication information is "0", the sixth indication information indicates that the third reference signal resource is for obtaining the input information of performing model training on the AI model. Alternatively, if a value of the sixth indication information is "1", the sixth indication information indicates that the third reference signal resource is for obtaining the input information of performing model training on the AI model.

Optionally, the third reference signal resource configuration information further includes indication information #10, and the indication information #10 indicates the identifier of the AI model. Correspondingly, the terminal device may determine the identifier of the AI model based on the indication information #10, and then the terminal device determines that the third reference signal resource is for obtaining the input information of performing model training on the AI model identified by the identifier of the AI model.

Further, if the AI model is deployed on the terminal device, S630a is performed in the method 600. If the AI model is deployed on the training device, S630b1 and S630b2 are performed in the method 600.

S630a: The terminal device performs the first operation based on the AI model.

After the terminal device receives the first reference signal resource configuration information, if the first indication information indicates that the first reference signal resource configured based on the first reference signal resource configuration information is for performing the first operation based on the AI model, or the first indication information indicates that the first reference signal resource is for obtaining a data set, and the data set is a data set for performing the first operation based on the AI model, the terminal device performs the first operation based on the AI model based on the first reference signal resource configuration information.

The following uses an example in which an AI model is for beam management to describe how a terminal device performs a first operation based on the AI model.

For example, if the first operation is model training on the AI model, the terminal device performs model training on the AI model based on first reference signal resource configuration information in the following steps. (1) The terminal device measures, based on a first reference signal resource configured based on the first reference signal resource configuration information, reference signals transmitted on the first reference signal resource, and obtains a signal measurement result of the reference signals transmitted on the first reference signal resource (for example, obtains RSRP of the reference signals transmitted on the first reference signal resource), where the reference signals transmitted on the first reference signal resource correspond to all beams supported by a network device (all the beams supported by the network device are denoted as a beam universal set below). (2) The terminal device determines, based on the RSRP of the reference signals transmitted on the first reference signal resource, a beam corresponding to a reference signal whose RSRP is the largest in the reference signals transmitted on the first reference signal resource to be an optimal beam, and uses a beam identifier of the optimal beam as a label of performing model training on the AI model. (3) The terminal device uses RSRP of reference signals that are in the reference signals transmitted on the first reference signal resource and that correspond to a group of sparse beams as input information of model training, and inputs the input information into the AI model. (4) The terminal device obtains output information of the AI model, where the output information of the AI model includes a probability that each beam in the beam universal set is the optimal beam. (5) The terminal device uses a beam with a highest probability of being the optimal beam in the beam universal set as the optimal beam predicted based on the AI model. (6) The terminal device calculates a loss function value based on the label of model training and the beam identifier of the optimal beam predicted based on the AI model. If the loss function value is less than a preset threshold, it indicates that training of the AI model is completed. If the loss function value is not less than the preset threshold, the terminal device performs model training on the AI model with reference to step (1) to step (6) until training of the AI model is completed.

For another example, if the first operation is model training on the AI model, the terminal device performs model training on the AI model based on first reference signal resource configuration information in the following steps. (a) The terminal device measures, based on a first reference signal resource configured based on the first reference signal resource configuration information, reference signals transmitted on the first reference signal resource, and obtains a signal measurement result of the reference signals transmitted on the first reference signal resource (for example, obtains RSRP of the reference signals transmitted on the first reference signal resource), where the reference signals transmitted on the first reference signal resource correspond to a beam universal set. (b) The terminal device uses the RSRP that is of the reference signals transmitted on the first reference signal resource and that is obtained through measurement as a label of performing model training on the AI model. (c) The terminal device uses RSRP of reference signals that are in the reference signals transmitted on the first reference signal resource and that correspond to a group of sparse beams as input information of model training, and inputs the input information into the AI model. (d) The terminal device obtains output information of the AI model, where the output information of the AI model includes RSRP that is of a reference signal corresponding to each beam in the beam universal set and that is predicted based on the AI model. (e) The terminal device calculates a loss function value based on the label of model training and the RSRP that is of a reference signal corresponding to each beam in the beam universal set and that is predicted based on the AI model. If the loss function value is less than a preset threshold, it indicates that training of the AI model is completed. If the loss function value is not less than the preset threshold, the terminal device performs model training on the AI model with reference to step (a) to step (e) until training of the AI model is completed.

For another example, if the first operation is model training on the AI model, and first indication information further indicates that a first reference signal resource is for obtaining a label of performing model training on the AI model, or first reference signal resource configuration information further includes fifth indication information, the terminal device performs the first operation based on the AI model based on the first reference signal resource configuration information and third reference signal resource configuration information.

For example, the terminal device performs the first operation based on the AI model based on the first reference signal resource configuration information and the third reference signal resource configuration information in the following steps: (A) The terminal device measures, based on the first reference signal resource configured based on the first reference signal resource configuration information, reference signals transmitted on the first reference signal resource, and obtains a signal measurement result of the reference signals transmitted on the first reference signal resource (for example, obtains RSRP of the reference signals transmitted on the first reference signal resource), where the reference signals transmitted on the first reference signal resource correspond to a narrow beam universal set. (B) The terminal device determines, based on the RSRP of the reference signals transmitted on the first reference signal resource, a beam corresponding to a reference signal whose RSRP is the largest in the reference signals transmitted on the first reference signal resource to be an optimal beam, and uses a beam identifier of the optimal beam as a label of performing model training on the AI model. (C) The terminal device measures, based on a third reference signal resource configured based on the third reference signal resource configuration information, reference signals transmitted on the third reference signal resource, and obtains a signal measurement result of the reference signals transmitted on the third reference signal resource (for example, obtains RSRP of the reference signals transmitted on the third reference signal resource). (D) The terminal device uses the RSRP of the reference signals transmitted on the third reference signal resource as input information of model training into the AI model. (E) The terminal device obtains output information of the AI model, where the output information of the AI model includes a probability that each beam in the narrow beam universal set is the optimal beam. (F) The terminal device uses a beam with a highest probability of being the optimal beam in the narrow beam universal set as the optimal beam predicted based on the AI model. (G) The terminal device calculates a loss function value based on the label of model training and the beam identifier of the optimal beam predicted based on the AI model. If the loss function value is less than a preset threshold, it indicates that training of the AI model is completed. If the loss function value is not less than the preset threshold, the terminal device performs model training on the AI model with reference to step (A) to step (G) until training of the AI model is completed.

For another example, the terminal device performs the first operation based on the AI model based on the first reference signal resource configuration information and the third reference signal resource configuration information in the following steps: (i) The terminal device measures, based on the first reference signal resource configured based on the first reference signal resource configuration information, reference signals transmitted on the first reference signal resource, and obtains a signal measurement result of the reference signals transmitted on the first reference signal resource (for example, obtains RSRP of the reference signals transmitted on the first reference signal resource), where the reference signals transmitted on the first reference signal resource correspond to a narrow beam universal set. (ii) The terminal device uses the RSRP of the reference signals transmitted on the first reference signal resource as a label of performing model training on the AI model. (iii) The terminal device measures, based on a third reference signal resource configured based on the third reference signal resource configuration information, reference signals transmitted on the third reference signal resource, and obtains a signal measurement result of the reference signals transmitted on the third reference signal resource (for example, obtains RSRP of the reference signals transmitted on the third reference signal resource). (iv) The terminal device uses the RSRP of the reference signals transmitted on the third reference signal resource as input information of model training into the AI model. (v) The terminal device obtains output information of the AI model, where the output information of the AI model includes RSRP that is of a reference signal corresponding to each beam in the narrow beam universal set and that is predicted based on the AI model. (vi) The terminal device calculates a loss function value based on the label of model training and the RSRP that is of a reference signal corresponding to each beam in the narrow beam universal set and that is predicted based on the AI model. If the loss function value is less than a preset threshold, it indicates that training of the AI model is completed. If the loss function value is not less than the preset threshold, the terminal device performs model training on the AI model with reference to step (i) to step (vi) until training of the AI model is completed.

In the process in which the terminal device performs model training on the AI model, the terminal device determines one or more optimal beams that can be used as the label in the model training process.

For still another example, if the first operation is model inference on the AI model, the terminal device performs the first operation based on the AI model and first reference signal resource configuration information in the following steps. (I) The terminal device measures, based on a first reference signal resource configured based on the first reference signal resource configuration information, reference signals transmitted on the first reference signal resource, and obtains a signal measurement result of the reference signals transmitted on the first reference signal resource (for example, obtains RSRP of the reference signals transmitted on the first reference signal resource). (II) The terminal device uses the RSRP of the reference signals transmitted on the first reference signal resource as input information of model inference into the AI model. (III) The terminal device obtains output information of the AI model. The output information of the AI model includes RSRP that is of a reference signal corresponding to each beam in a beam universal set and that is predicted based on the AI model, or the output information of the AI model includes a probability that each beam in a beam universal set is an optimal beam.

S630b1: The terminal device sends second information to the training device.

Correspondingly, the training device receives the second information from the terminal device.

The second information includes a signal measurement result obtained by the terminal device by measuring a reference signal transmitted on the first reference signal resource, or the second information includes a data set for performing the first operation based on the AI model.

After the terminal device receives the first reference signal resource configuration information, if the first indication information indicates that the first reference signal resource is for performing the first operation based on the AI model, or the first indication information indicates that the first reference signal resource is for obtaining a data set, and the data set is a data set for performing the first operation based on the AI model, the terminal device obtains the second information based on the first reference signal resource configuration information, and sends the second information to the training device.

For example, the terminal device obtains the signal measurement result by measuring the reference signal transmitted on the first reference signal resource, and sends the signal measurement result to the training device.

If the first indication information further indicates that the first reference signal resource is for obtaining the label of performing model training on the AI model, or the first reference signal resource configuration information further includes the fifth indication information, and the fifth indication information indicates that the first reference signal resource is for obtaining the label of performing model training on the AI model, the second information further includes a signal measurement result obtained by the terminal device by measuring a reference signal transmitted on the third reference signal resource.

For another example, the terminal device obtains the signal measurement result by measuring the reference signal transmitted on the first reference signal resource, determines, based on the signal measurement result, a data set for performing the first operation based on the AI model, and sends the data set for performing the first operation based on the AI model to the training device.

For example, if the first operation is model training on the AI model, the terminal device may obtain, with reference to step (1) to step (3) or step (a) to step (c), the label and the input information of performing model training on the AI model, so that the terminal device sends the label and the input information of performing model training on the AI model to the training device.

For another example, if the first operation is model inference on the AI model, the terminal device may obtain, with reference to step (I) and step (II), the input information of performing model inference on the AI model, and then the terminal device sends the input information of performing model inference on the AI model to the training device.

For another example, if the first indication information further indicates that the first reference signal resource is for obtaining the label of performing model training on the AI model, or the first reference signal resource configuration information further includes the fifth indication information, and the fifth indication information indicates that the first reference signal resource is for obtaining the label of performing model training on the AI model, the terminal device may obtain, with reference to step (A) to step (D) or step (i) to step (iv), the label and the input information of performing model training on the AI model, and then the terminal device sends, to the training device, the label and the input information of performing model training on the AI model.

S630b2: The training device performs the first operation based on the AI model.

After receiving the second information from the terminal device, the training device may perform the first operation based on the AI model and the second information.

For example, the first operation is model training on the AI model, and the second information includes the signal measurement result obtained by the terminal device by measuring the reference signal transmitted on the first reference signal resource. In this case, for steps of performing the first operation based on the AI model by the training device, refer to descriptions related to performing the first operation on the AI model in step (2) to step (6) or step (b) to step (e).

For another example, the first operation is model training on the AI model, and the second information includes the signal measurement result obtained by the terminal device by measuring the reference signal transmitted on the first reference signal resource, and the signal measurement result obtained by the terminal device by measuring the reference signal transmitted on the third reference signal resource. In this case, for steps of performing the first operation based on the AI model by the training device, refer to descriptions related to performing the first operation on the AI model in step (B) and step (D) to step (G), or step (ii) and step (iv) to step (vi).

For another example, the first operation is model training on the AI model, and the second information includes the data set for performing model training on the AI model. In this case, for steps of performing the first operation based on the AI model by the training device, refer to descriptions related to performing the first operation on the AI model in step (3) to step (6), step (c) to step (e), step (D) to step (G), or step (iv) to step (vi).

For another example, if the first operation is model inference on the AI model, for steps of performing the first operation based on the AI model by the training device, refer to descriptions related to performing the first operation on the AI model in step (II) and step (III).

Optionally, the method 600 further includes: The terminal device receives fourth reference signal resource configuration information from the network device, where the fourth reference signal resource configuration information includes ninth indication information, and the ninth indication information indicates that a fourth reference signal resource configured based on the fourth reference signal resource configuration information is for performing a non-AI-model-based operation. The terminal device performs the non-AI-model-based operation based on the fourth reference signal resource. The non-AI-model-based operation may include measuring signal quality of a reference signal transmitted on the fourth reference signal resource.

In this embodiment of this application, reference signal resource configuration information (for example, the first reference signal resource configuration information) sent by the network device to the terminal device includes indication information (for example, the first indication information) indicating a purpose of a reference signal resource. In this way, the terminal device can identify the purpose of the reference signal resource based on the indication information, and perform the first operation on the AI model based on the reference signal resource, or perform the non-AI-model-based operation based on the reference signal resource. When the terminal device can determine the purpose of the reference signal resource based on the indication information included in the reference signal resource configuration information, the terminal device can be prevented from performing the non-AI-model-based operation based on the reference signal resource for performing the first operation on the AI model. This helps balance performance and resource consumption of performing model training on the AI model, and/or balance performance and resource consumption of performing model inference based on the AI model.

With reference to FIG. 7 to FIG. 9, the following describes a communication method provided in embodiments of this application by using an example in which an AI model is for beam management and training of the AI model may be completed on a terminal device.

FIG. 7 is a schematic flowchart of a communication method 700 according to an embodiment of this application. The method 700 shown in FIG. 7 may include the following steps.

S710: A terminal device sends first information to a network device.

Correspondingly, in S710, the network device receives the first information from the terminal device. It may be understood that the first information is a representation of the "first information" in S610.

The first information is for requesting to perform model training on an AI model, and the first information includes one or more of the following: an identifier of the AI model, computing power information of the terminal device, sparse beam indication information, or a training mechanism of the AI model.

For more descriptions of S710, refer to S610. For brevity, details are not described herein again.

It should be further noted that S710 is an optional step. For example, whether the terminal device performs model training on the AI model is determined by the network device, and S710 may not be performed in the method 700.

S720: The network device sends second reference signal resource configuration information to the terminal device.

Correspondingly, the terminal device receives the second reference signal resource configuration information from the network device.

The second reference signal resource configuration information includes second indication information, and the second indication information indicates that a second reference signal resource configured based on the second reference signal resource configuration information is for performing model training on the AI model, or the second indication information indicates that a second reference signal resource is for obtaining a data set #1, and the data set #1 is a data set for performing model training on the AI model. For a specific form of the second indication information, refer to the descriptions of the specific form of the first indication information in S620. Reference signals transmitted on the second reference signal resource correspond to all beams supported by the network device.

Optionally, the foregoing model training may be replaced with an input and a label of model training.

The second reference signal resource configuration information may be carried in one or more of the following fields: a CSI report configuration field, a CSI resource configuration field, a CSI-RS resource set field, or a CSI-RS resource set list field.

Optionally, the second reference signal resource configuration information further includes fourth indication information indicative of an association relationship between a first reference signal resource and the second reference signal resource.

When the second reference signal resource configuration information includes the fourth indication information, the terminal device may determine, based on the association relationship between the first reference signal resource and the second reference signal resource, that the first reference signal resource and the second reference signal resource correspond to the same AI model.

For example, the fourth indication information indicates the association relationship between the first reference signal resource and the second reference signal resource in one or more of the following manners:

For example, the fourth indication information indicates an identifier of the first reference signal resource that has the association relationship with the second reference signal resource. The identifier of the first reference signal resource is an identifier (identifier, ID) of the first reference signal resource. Alternatively, the identifier of the first reference signal resource is a sequence number of the first reference signal resource in a reference signal resource set #1. Alternatively, the identifier of the first reference signal resource is a first bitmap, a quantity of bits included in the first bitmap is the same as a quantity of reference signal resources included in the reference signal resource set #1, and each bit included in the first bitmap corresponds to one reference signal resource in the reference signal resource set #1. For example, when a bit indicates "0", it may be considered that a reference signal resource corresponding to the bit is the first reference signal resource that has the association relationship with the second reference signal resource. Alternatively, when a bit indicates "1", it may be considered that a reference signal resource corresponding to the bit is the first reference signal resource that has the association relationship with the second reference signal resource.

For another example, the fourth indication information indicates an identifier of the reference signal resource set #1 that has an association relationship with the second reference signal, and the reference signal resource set #1 includes the first reference signal resource that has the association relationship with the second reference signal resource.

For another example, the fourth indication information indicates an identifier of first reference signal resource configuration information that has an association relationship with the second reference signal resource. If the first reference signal resource configuration information is carried in the CSI report configuration field, the identifier of the first reference signal resource configuration information may be a report configuration identifier (ReportConfigId). If the first reference signal resource configuration information is carried in the CSI resource configuration field, the identifier of the first reference signal resource configuration information may be a resource configuration identifier (ResourceConfigId). If the first reference signal resource configuration information is carried in the CSI-RS resource set field, the identifier of the first reference signal resource configuration information may be a resource set identifier (ResourceSetId) field. If the first reference signal resource configuration information is carried in the CSI-RS resource set list field, the identifier of the first reference signal resource configuration information may be a resource set list identifier (ResourceSetListId).

For another example, the fourth indication information indicates an identifier of the AI model corresponding to the second reference signal resource. The identifier of the AI model indicated by the fourth indication information is the same as an identifier of an AI model indicated by third indication information, the third indication information indicates an identifier of the AI model corresponding to the first reference signal resource, and the third indication information is included in the first reference signal resource configuration information. When the identifier of the AI model indicated by the third indication information is the same as the identifier of the AI model indicated by the fourth indication information, the terminal device can determine that the first reference signal resource and the second reference signal resource correspond to the same AI model, and determine that the first reference signal resource and the second reference signal resource have the association relationship.

S730: The terminal device performs model training on the AI model.

After receiving the second reference signal resource configuration information, if the terminal device determines, based on the second indication information, that the second reference signal resource configured based on the second reference signal resource configuration information is for performing model training on the AI model, or determines, based on the second indication information, that the second reference signal resource is for obtaining the data set #1, the terminal device performs model training on the AI model based on the second reference signal resource configuration information.

For steps of performing model training on the AI model by the terminal device based on the second reference signal resource configuration information, refer to step (1) to step (6) in S630a, or refer to step (a) to step (e) in S630a.

S740: The terminal device sends third information to the network device.

Correspondingly, the network device receives the third information from the terminal device. It may be understood that the third information is also a representation of the "first information" in S610.

The third information is for requesting to perform model inference on the AI model, and the third information includes one or more of the following: an identifier of the AI model, indication information #1, or sparse beam indication information. The indication information #1 indicates that training of the AI model is completed.

For more descriptions of S740, refer to S610. For brevity, details are not described herein again.

It should be further noted that S740 is an optional step. For example, whether the terminal device performs model inference on the AI model is determined by the network device, and S740 may not be performed in the method 700.

S750: The network device sends the first reference signal resource configuration information to the terminal device.

Correspondingly, the terminal device receives the first reference signal resource configuration information from the network device.

The first reference signal resource configuration information may be carried in one or more of the following fields: a CSI report configuration field, a CSI resource configuration field, a CSI-RS resource set field, or a CSI-RS resource set list field.

The first reference signal resource configuration information includes first indication information, and the first indication information indicates that a first reference signal resource configured based on the first reference signal resource configuration information is for performing model inference on the AI model, or the first indication information indicates that the first reference signal resource is for obtaining a data set #2, and the data set #2 is a data set for performing model inference on the AI model. For a specific form of the first indication information, refer to the descriptions in S620.

Reference signals transmitted on the first reference signal resource correspond to a group of sparse beams.

Optionally, the first reference signal resource configuration information further includes third indication information indicative of the association relationship between the first reference signal resource and the second reference signal resource.

When the first reference signal resource configuration information includes the third indication information, the terminal device may determine, based on the association relationship between the first reference signal resource and the second reference signal resource, that the first reference signal resource and the second reference signal resource correspond to the same AI model.

For example, the third indication information indicates the association relationship between the first reference signal resource and the second reference signal resource in one or more of the following manners:

For example, the third indication information indicates an identifier of the second reference signal resource that has the association relationship with the first reference signal resource. The identifier of the second reference signal resource is an ID of the second reference signal resource. Alternatively, the identifier of the second reference signal resource is a sequence number of the second reference signal resource in a reference signal resource set #2. Alternatively, the identifier of the second reference signal resource is a second bitmap, a quantity of bits included in the second bitmap is the same as a quantity of reference signal resources included in the reference signal resource set #2, and each bit included in the second bitmap corresponds to one reference signal resource in the reference signal resource set #2. For example, when a bit indicates "0", it may be considered that a reference signal resource corresponding to the bit is the second reference signal resource that has the association relationship with the first reference signal resource. Alternatively, when a bit indicates "1", it may be considered that a reference signal resource corresponding to the bit is the second reference signal resource that has the association relationship with the first reference signal resource. Optionally, in this manner, one of the fourth indication information or the third indication information may indicate the association relationship between the first reference signal resource and the second reference signal resource.

For another example, the third indication information indicates an identifier of the reference signal resource set #2 that has an association relationship with the first reference signal, and the reference signal resource set #2 includes the second reference signal resource that has the association relationship with the first reference signal resource. Optionally, in this manner, one of the fourth indication information or the third indication information may indicate the association relationship between the first reference signal resource and the second reference signal resource.

For another example, the third indication information indicates an identifier of the second reference signal resource configuration information that has an association relationship with the first reference signal resource. If the second reference signal resource configuration information is carried in the CSI report configuration field, the identifier of the second reference signal resource configuration information may be a report configuration identifier (ReportConfigId). If the second reference signal resource configuration information is carried in the CSI resource configuration field, the identifier of the second reference signal resource configuration information may be a resource configuration identifier (ResourceConfigId). If the second reference signal resource configuration information is carried in the CSI-RS resource set field, the identifier of the second reference signal resource configuration information may be a resource set identifier (ResourceSetId) field. If the second reference signal resource configuration information is carried in the CSI-RS resource set list field, the identifier of the second reference signal resource configuration information may be a resource set list identifier (ResourceSetListId). Optionally, in this manner, one of the fourth indication information or the third indication information may indicate the association relationship between the first reference signal resource and the second reference signal resource.

For another example, the third indication information indicates an identifier of the AI model corresponding to the first reference signal resource. The identifier of the AI model indicated by the third indication information is the same as an identifier of an AI model indicated by fourth indication information, the fourth indication information indicates an identifier of the AI model corresponding to the second reference signal resource, and the fourth indication information is included in the second reference signal resource configuration information. When the identifier of the AI model indicated by the third indication information is the same as the identifier of the AI model indicated by the fourth indication information, the terminal device can determine that the first reference signal resource and the second reference signal resource correspond to the same AI model, and determine that the first reference signal resource and the second reference signal resource have the association relationship. In this manner, the fourth indication information and the third indication information may together indicate the association relationship between the first reference signal resource and the second reference signal resource.

S760: The terminal device performs model inference based on the AI model.

After receiving the first reference signal resource configuration information, if the terminal device determines, based on the first indication information, that the first reference signal resource configured based on the first reference signal resource configuration information is for performing model inference on the AI model, or determines, based on the first indication information, that the first reference signal resource is for obtaining the data set #2, the terminal device performs model inference on the AI model based on the first reference signal resource configuration information.

For steps of performing model inference on the AI model by the terminal device based on the first reference signal resource configuration information, refer to step (I) to step (III) in S630a.

In this embodiment of this application, the second reference signal resource configuration information sent by the network device to the terminal device includes the second indication information. In this way, the terminal device can determine, based on the second indication information, that the second reference signal resource is for performing model training on the AI model. This can prevent the terminal device from performing model inference on the AI model based on the second reference signal resource, or prevent the terminal device from performing a non-AI-model-based operation based on the second reference signal resource, thereby helping balance performance and resource consumption of performing model training on the AI model.

The first reference signal resource configuration information sent by the network device to the terminal device includes the first indication information. In this way, the terminal device can determine, based on the first indication information, that the first reference signal resource is for performing model inference on the AI model. This can prevent the terminal device from performing model training on the AI model based on the first reference signal resource, or prevent the terminal device from performing a non-AI-model-based operation based on the first reference signal resource, thereby helping balance performance and resource consumption of performing model inference on the AI model.

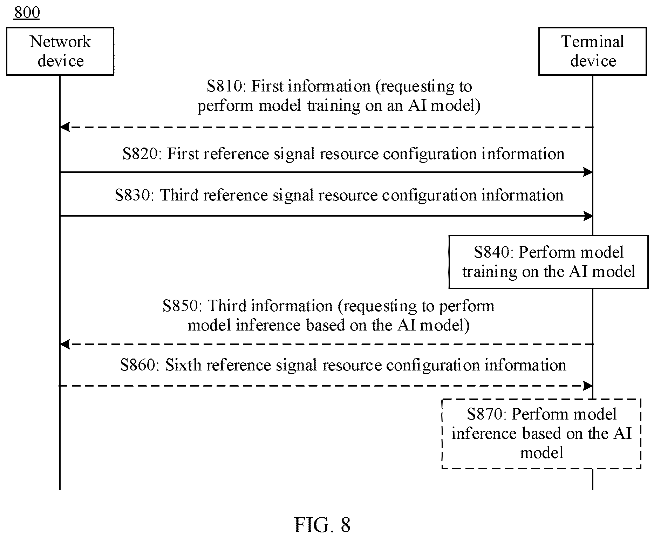

FIG. 8 is a schematic flowchart of a communication method 800 according to an embodiment of this application. The method 800 shown in FIG. 8 may include the following steps.

S810: A terminal device sends first information to a network device.

Correspondingly, in S810, the network device receives the first information from the terminal device. It may be understood that the first information is a representation of the "first information" in S610.

The first information is for requesting to perform model training on an AI model, and the first information includes one or more of the following: an identifier of the AI model, computing power information of the terminal device, sparse beam indication information, or a training mechanism of the AI model.

For more descriptions of S810, refer to S610. For brevity, details are not described herein again.

It should be noted that S810 is an optional step. For example, whether the terminal device performs model training on the AI model is determined by the network device, and S810 may not be performed in the method 800.

S820: The network device sends first reference signal resource configuration information to the terminal device.

Correspondingly, the terminal device receives the first reference signal resource configuration information from the network device.

The first reference signal resource configuration information may be carried in one or more of the following fields: a CSI report configuration field, a CSI resource configuration field, a CSI-RS resource set field, or a CSI-RS resource set list field.

The first reference signal resource configuration information includes first indication information, and the first indication information indicates that a first reference signal resource configured based on the first reference signal resource configuration information is for performing model training on the AI model, or the first indication information indicates that the first reference signal resource is for obtaining a data set #1, and the data set #1 is a data set for performing model training on the AI model. Reference signals transmitted on the first reference signal resource correspond to all narrow beams supported by the network device, and all the narrow beams supported by the network device are denoted as a narrow beam universal set.

The first indication information further indicates that the first reference signal resource is for obtaining a label of performing model training on the AI model. For a specific form of the first indication information, refer to the descriptions in S620. Alternatively, the first reference signal resource configuration information further includes fifth indication information, and the fifth indication information indicates that the first reference signal resource is for obtaining the label of performing model training on the AI model. For a specific form of the fifth indication information, refer to the descriptions in S620.

Optionally, the first reference signal resource configuration information further includes seventh indication information indicative of an association relationship between the first reference signal resource and a third reference signal resource.

When the first reference signal resource configuration information includes the seventh indication information, the terminal device may determine, based on the association relationship between the first reference signal resource and the third reference signal resource, that the first reference signal resource and the third reference signal resource correspond to the same AI model.

For example, the seventh indication information indicates the association relationship between the first reference signal resource and the third reference signal resource in one or more of the following manners:

For example, the seventh indication information indicates a time offset value of the first reference signal resource relative to the third reference signal resource.

For another example, the seventh indication information indicates an identifier of the third reference signal resource that has the association relationship with the first reference signal resource. The identifier of the third reference signal resource is an ID of the third reference signal resource. Alternatively, the identifier of the third reference signal resource is a sequence number of the third reference signal resource in a reference signal resource set #3. Alternatively, the identifier of the third reference signal resource is a third bitmap, a quantity of bits included in the third bitmap is the same as a quantity of reference signal resources included in the reference signal resource set #3, and each bit included in the third bitmap corresponds to one reference signal resource in the reference signal resource set #3. For example, when a bit indicates "0", it may be considered that a reference signal resource corresponding to the bit is the third reference signal resource that has the association relationship with the first reference signal resource. Alternatively, when a bit indicates "1", it may be considered that a reference signal resource corresponding to the bit is the third reference signal resource that has the association relationship with the first reference signal resource.

For another example, the seventh indication information indicates an identifier of the reference signal resource set #3 that has an association relationship with the first reference signal resource, and the reference signal resource set #3 includes the third reference signal resource that has the association relationship with the first reference signal resource.

For another example, the seventh indication information indicates an identifier of the AI model corresponding to the first reference signal resource. The identifier of the AI model indicated by the seventh indication information is the same as an identifier of an AI model indicated by eighth indication information, the eighth indication information indicates an identifier of the AI model corresponding to the third reference signal resource, and the eighth indication information is included in the third reference signal resource configuration information. When the identifier of the AI model indicated by the seventh indication information is the same as the identifier of the AI model indicated by the eighth indication information, the terminal device can determine that the first reference signal resource and the third reference signal resource correspond to the same AI model, and determine that the first reference signal resource and the third reference signal resource have the association relationship.

Optionally, the first reference signal resource configuration information further includes indication information #2, and the indication information #2 indicates an association relationship between the first reference signal resource and a sixth reference signal resource. For more descriptions of the indication information #2, refer to the descriptions of the third indication information in S750.

Optionally, when the seventh indication information indicates the identifier of the AI model corresponding to the first reference signal resource, the identifier of the AI model indicated by the seventh indication information is the same as an identifier of an AI model indicated by indication information #3, the indication information #3 indicates an identifier of an AI model corresponding to the sixth reference signal resource, and the indication information #3 is included in sixth reference signal resource configuration information.

S830: The network device sends the third reference signal resource configuration information to the terminal device.

Correspondingly, the terminal device receives the third reference signal resource configuration information from the network device.

The third reference signal resource configuration information includes sixth indication information, and the sixth indication information indicates that a third reference signal resource configured based on the third reference signal resource configuration information is for obtaining input information of performing model training on the AI model. For a specific form of the sixth indication information, refer to the descriptions in S620. Reference signals transmitted on the third reference signal resource correspond to all wide beams supported by the network device, and all the wide beams supported by the network device are denoted as a wide beam universal set.

The third reference signal resource configuration information may be carried in one or more of the following fields: a CSI report configuration field, a CSI resource configuration field, a CSI-RS resource set field, or a CSI-RS resource set list field.

Optionally, the third reference signal resource configuration information further includes eighth indication information indicative of an association relationship between the first reference signal resource and the third reference signal resource.

When the third reference signal resource configuration information includes the eighth indication information, the terminal device may determine, based on the association relationship between the first reference signal resource and the third reference signal resource, that the first reference signal resource and the third reference signal resource correspond to the same AI model.

When the third reference signal resource configuration information includes the eighth indication information, the terminal device may obtain, based on the association relationship between the first reference signal resource and the third reference signal resource, a label and input information of performing model training on the AI model.

For example, the eighth indication information indicates the association relationship between the first reference signal resource and the third reference signal resource in one or more of the following manners:

For example, the eighth indication information indicates a time offset value of the third reference signal resource relative to the first reference signal resource. Optionally, in this manner, one of the seventh indication information or the eighth indication information may indicate the association relationship between the first reference signal resource and the third reference signal resource.

**EP 4 661 553 A1**

For another example, the eighth indication information indicates an identifier of the first reference signal resource that has the association relationship with the third reference signal resource. For the identifier of the first reference signal resource, refer to the descriptions in S750. Optionally, in this manner, one of the seventh indication information or the eighth indication information may indicate the association relationship between the first reference signal resource and the third reference signal resource.

For another example, the eighth indication information indicates an identifier of the reference signal resource set #1 that has an association relationship with the third reference signal resource, and the reference signal resource set #1 includes the first reference signal resource that has the association relationship with the third reference signal resource. Optionally, in this manner, one of the seventh indication information or the eighth indication information may indicate the association relationship between the first reference signal resource and the third reference signal resource.

For another example, the eighth indication information indicates an identifier of first reference signal resource configuration information that has an association relationship with the third reference signal resource. For the identifier of the first reference signal resource configuration information, refer to the descriptions in S720. Optionally, in this manner, one of the seventh indication information or the eighth indication information may indicate the association relationship between the first reference signal resource and the third reference signal resource.

For another example, the eighth indication information indicates an identifier of the AI model corresponding to the third reference signal resource. The identifier of the AI model indicated by the eighth indication information is the same as an identifier of an AI model indicated by seventh indication information, the seventh indication information indicates an identifier of the AI model corresponding to the first reference signal resource, and the seventh indication information is included in the first reference signal resource configuration information. When the identifier of the AI model indicated by the eighth indication information is the same as the identifier of the AI model indicated by the seventh indication information, the terminal device can determine that the first reference signal resource and the third reference signal resource correspond to the same AI model, and determine that the first reference signal resource and the third reference signal resource have the association relationship. In this manner, the seventh indication information and the eighth indication information may together indicate the association relationship between the first reference signal resource and the third reference signal resource.

Optionally, the third reference signal resource configuration information further includes indication information #4, and the indication information #4 indicates an association relationship between the third reference signal resource and a sixth reference signal resource. For more descriptions of the indication information #4, refer to the descriptions of the third indication information in S750.

Optionally, when the eighth indication information indicates the identifier of the AI model corresponding to the third reference signal resource, the identifier of the AI model indicated by the eighth indication information is the same as an identifier of an AI model indicated by indication information #3, the indication information #3 indicates an identifier of an AI model corresponding to the sixth reference signal resource, and the indication information #3 is included in sixth reference signal resource configuration information.

S840: The terminal device performs model training on the AI model.

After receiving the first reference signal resource configuration information and the third reference signal resource configuration information, if the terminal device determines, based on the first indication information, that the first reference signal resource configured based on the first reference signal resource configuration information is for obtaining the label of performing model training on the AI model, and determines, based on the sixth indication information, that the third reference signal resource configured based on the third reference signal resource configuration information is for obtaining the input information of performing model training on the AI model, the terminal device performs model training on the AI model based on the first reference signal resource configuration information and the third reference signal resource configuration information.

For steps of performing model training on the AI model by the terminal device based on the first reference signal resource configuration information and the third reference signal resource configuration information, refer to step (A) to step (G) in S630a, or step (i) to step (iv) in S630a.

Optionally, the method 800 further includes S850 to S870.

S850: The terminal device sends third information to the network device.

Correspondingly, the network device receives the third information from the terminal device. It may be understood that the third information is also a representation of the "first information" in S610.

The third information is for requesting to perform model inference on the AI model, and the third information includes one or more of the following: an identifier of the AI model, indication information #1, or sparse beam indication information. The indication information #1 indicates that training of the AI model is completed.

For more descriptions of S850, refer to S610. For brevity, details are not described herein again.

It should be noted that S850 is an optional step. For example, whether the terminal device performs model inference on the AI model is determined by the network device, and S850 may not be performed in the method 800.

S860: The network device sends the sixth reference signal resource configuration information to the terminal device.

Correspondingly, the terminal device receives the sixth reference signal resource configuration information from the network device.

The sixth reference signal resource configuration information may be carried in one or more of the following fields: a CSI report configuration field, a CSI resource configuration field, a CSI-RS resource set field, or a CSI-RS resource set list field.

The sixth reference signal resource configuration information includes indication information #5, and the indication information #5 indicates that a sixth reference signal resource configured based on the sixth reference signal resource configuration information is for performing model inference on the AI model, or the indication information #5 indicates that the sixth reference signal resource is for obtaining a data set #2, and the data set #2 is a data set for performing model inference on the AI model. Reference signals transmitted on the sixth reference signal resource correspond to the wide beam universal set.

Optionally, the sixth reference signal resource configuration information further includes indication information #6, and the indication information #6 indicates an association relationship between the first reference signal resource and a sixth reference signal resource. For more descriptions of the indication information #6, refer to the descriptions of the third indication information in S750.

Optionally, the sixth reference signal resource configuration information further includes indication information #7, and the indication information #7 indicates an association relationship between the third reference signal resource and a sixth reference signal resource. For more descriptions of the indication information #7, refer to the descriptions of the third indication information in S750.

Optionally, the sixth reference signal resource configuration information further includes indication information #3, and the indication information #3 indicates an identifier of an AI model corresponding to a sixth reference signal resource. The identifier of the AI model indicated by the indication information #3 is the same as the identifier of the AI model indicated by the seventh indication information indicative of the identifier of the AI model corresponding to the first reference signal resource. Alternatively, the identifier of the AI model indicated by the indication information #3 is the same as the identifier of the AI model indicated by the eighth indication information indicative of the identifier of the AI model corresponding to the third reference signal resource.

S870: The terminal device performs model inference based on the AI model.

After receiving the sixth reference signal resource configuration information, if the terminal device determines, based on the indication information #5, that the sixth reference signal resource configured based on the sixth reference signal resource configuration information is for performing model inference on the AI model, or determines, based on the indication information #5, that the sixth reference signal resource is for obtaining the data set #2, the terminal device performs model inference on the AI model based on the sixth reference signal resource configuration information.

For steps of performing model inference on the AI model by the terminal device based on the sixth reference signal resource configuration information, refer to step (I) to step (III) in S630a.

In this embodiment of this application, even if the reference signal resource for obtaining the label of performing model training on the AI model and the reference signal resource for obtaining the input information of performing model training on the AI model are different reference signal resources, the terminal device may still identify a purpose of a reference signal resource based on indication information (for example, the first indication information or the sixth indication information) in received reference signal resource configuration information, to obtain the label and the input information of performing model training on the AI model. This helps balance performance and resource consumption of performing model training on the AI model.

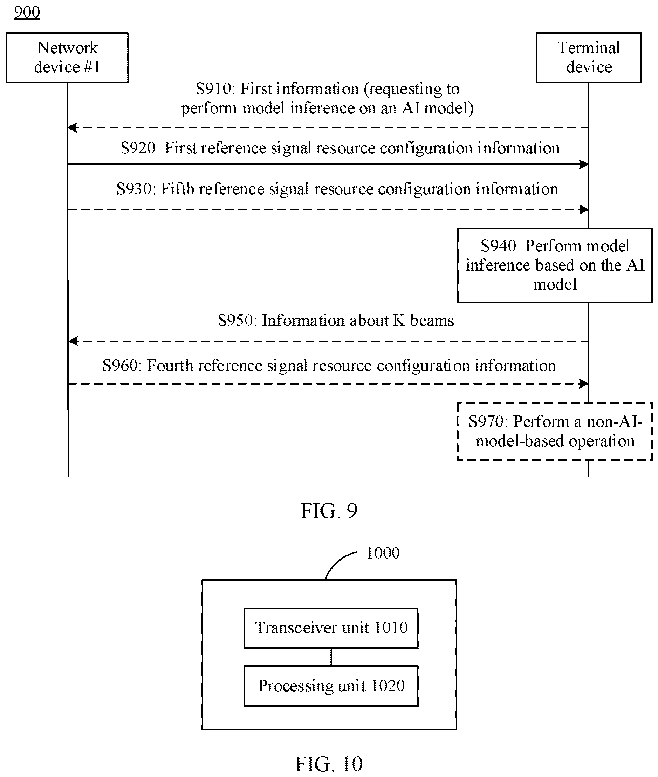

FIG. 9 is a schematic flowchart of a communication method 900 according to an embodiment of this application. The method 900 shown in FIG. 9 may include the following steps.

S910: A terminal device sends first information to a network device #1.

Correspondingly, in S910, the network device #1 receives the first information from the terminal device.

The first information is for requesting to perform model inference on an AI model, and the first information includes one or more of the following: an identifier of the AI model, sparse beam indication information, or indication information #1. The indication information #1 indicates that training of the AI model is completed.

For more descriptions of S910, refer to S610. For brevity, details are not described herein again.

It should be noted that S910 is an optional step. For example, whether the terminal device performs model training on the AI model is determined by the network device, and S910 may not be performed in the method 900.

S920: The network device #1 sends first reference signal resource configuration information to the terminal device.

Correspondingly, the terminal device receives the first reference signal resource configuration information from the network device #1.

The first reference signal resource configuration information may be carried in one or more of the following fields: a CSI report configuration field, a CSI resource configuration field, a CSI-RS resource set field, or a CSI-RS resource set list field.

The first reference signal resource configuration information includes first indication information, and the first indication information indicates that a first reference signal resource configured based on the first reference signal resource configuration information is for performing model inference on the AI model, or the first indication information indicates that the first reference signal resource is for obtaining a data set #2, and the data set #2 is a data set for performing model inference on the AI model. For a specific form of the first indication information, refer to the descriptions in S620. Reference signals transmitted on the first reference signal resource correspond to a group of sparse beams, or reference signals transmitted on the first reference signal resource correspond to all wide beams supported by the network device #1, and all wide beams supported by the network device #1 are denoted as a wide beam universal set.

For example, the first indication information is active state indication information of the AI model, and the first indication information indicates that the AI model is in an active (active) state or an enabled state.

Optionally, the first reference signal resource configuration information further includes first identifier information. The first identifier information corresponds to a target reference signal resource set, and the target reference signal resource set includes a reference signal resource corresponding to output information of model inference of the AI model, or the target reference signal resource set includes a reference signal resource corresponding to a label in a training process of the AI model, that is, reference signal resources corresponding to all beams supported by the network device. All the beams supported by the network device are different in different application scenarios. For example, different network devices support different quantities of all beams, and correspondingly, AI models obtained through training are also different. In an inference process, reference signal resources corresponding to all the beams supported by the network device associated with this inference (for example, the first reference signal resource) are indicated, so that the terminal device can perform inference based on the AI models corresponding to the reference signal resources corresponding to all the beams supported by the network device. A reference signal resource corresponding to the output information of model inference of the AI model is denoted as a reference signal resource #1. A correspondence between the output information of model inference of the AI model and the reference signal resource #1 may be described as follows: The output information of model inference of the AI model represents a signal measurement result that is of a reference signal transmitted on the reference signal resource #1 and that is predicted based on the AI model. When the output information of model inference of the AI model corresponds to the reference signal resource #1, the terminal device may determine the AI model based on the reference signal resource #1, or determine the AI model based on the target reference signal resource set. Alternatively, a correspondence between the label in the model training process of the AI model and the reference signal resource #1 may be described as follows: The reference signal resource #1 is for obtaining the label in the model training process of the AI model.

In a possible implementation, the first identifier information is for identifying the target reference signal resource set in a plurality of network devices or a plurality of cells, the plurality of network devices include the network device #1, and the plurality of cells include a cell #1 in which the terminal device runs the AI model in the network device #1. Optionally, the plurality of network devices belong to a same operator or a same device vendor. Optionally, network devices to which the plurality of cells belong belong to a same operator or a same device vendor.

When the first identifier information is for identifying the target reference signal resource set in the plurality of network devices or the plurality of cells, the first identifier information may be referred to as a global identifier of the target reference signal resource set. For example, the first identifier information includes a sequence number of the target reference signal resource set in a first target reference signal resource set group, and the first target reference signal resource set group is a reference signal resource set group configured for the plurality of network devices or the plurality of cells.

The following uses an example in which the first reference signal resource is SetB and the target reference signal resource set is SetA to describe an example of the first reference signal resource configuration information and an example of resource configuration information for configuring the target reference signal resource set for the plurality of network devices or the plurality of cells.

Example a

An example in which the first reference signal resource configuration information is carried in a CSI-ReportConfig field is shown as follows, where reportConfigId-SetA' is an example of the first identifier information.

CSI-ReportConfig ::= sequence (SEQUENCE) {

reportConfigId-SetB    report configuration identifier (reportConfigId)

reportConfigId-SetA'

… }

An example in which resource configuration information for configuring the target reference signal resource set for the plurality of network devices or the plurality of cells is carried in a CSI-ReportConfig field is shown as follows.

```
CSI-ReportConfig ::= SEQUENCE {
   reportConfigId-SetA'
   ... }
```

Example b

An example in which the first reference signal resource configuration information is carried in a CSI-Resource-Config field may be shown as follows, and ResourceConfigId-SetA' is an example of the first identifier information.

CSI-ResourceConfig ::=    SEQUENCE {

csi-ResourceConfigId-SetB    resource configuration identifier (CSI-ResourceConfigId),

ResourceConfigId-SetA'

csi-RS-ResourceSetList    choice (CHOICE) {

nzp-CSI-RS-SSB        SEQUENCE {

…}

An example in which resource configuration information for configuring the target reference signal resource set for the plurality of network devices or the plurality of cells is carried in a CSI-ResourceConfig field is shown as follows.

CSI-ResourceConfig ::=    SEQUENCE {

ResourceConfigId-SetA'

csi-RS-ResourceSetList    CHOICE {

nzp-CSI-RS-SSB        SEQUENCE {

…}

Example c

An example in which the first reference signal resource configuration information is carried in a CSI-RS-ResourcSetList field may be shown as follows, and ResourceConfigId-SetA' is an example of the first identifier information.

```
csi-RS-ResourceSetList     CHOICE {
           nzp-CSI-RS-SSB          SEQUENCE {
           ResourceConfigId-SetB
              ResourceConfigId-SetA'
              …}
```

An example in which resource configuration information for configuring the target reference signal resource set for the plurality of network devices or the plurality of cells is carried in a CSI-RS-ResourceSetList field is shown as follows.

```
csi-RS-ResourceSetList     CHOICE {
           nzp-CSI-RS-SSB          SEQUENCE {
              ResourceConfigId-SetA'
              …}
```

It should be understood that when the first reference signal resource configuration information includes the first identifier information, the terminal device may determine, based on the first identifier information, the target reference signal resource set configured for the plurality of network devices or the plurality of cells, to determine, based on the target reference signal resource set, the AI model corresponding to the target reference signal resource set, and perform model inference based on the AI model corresponding to the target reference signal resource set.

In a possible implementation, the first identifier information is for identifying the target reference signal resource set in the network device #1 or a plurality of cells #1, the cells #1 are cells in which the terminal device runs the AI model in the network device #1. When the first identifier information is for identifying the target reference signal resource set in the network device #1 or the cells #1, the first identifier information may be referred to as a local identifier of the target reference signal resource set. For example, the first identifier information includes a sequence number of the target reference signal resource set in a second target reference signal resource set group, and the second target reference signal resource set group is a reference signal resource set group configured for the network device #1 or the cells #1.

When the first identifier information is the local identifier of the target reference signal resource set, the method 900 further includes S930: The network device sends fifth reference signal resource configuration information to the terminal device, where the fifth reference signal resource configuration information is for configuring the target reference signal resource set in the network device #1 or the cells #1, the fifth reference signal resource configuration information includes the first identifier information and second identifier information, and the second identifier information is for identifying the target reference signal resource set in a plurality of network devices or a plurality of cells, that is, the second identifier information is a global identifier of the target reference signal resource set. For example, the second identifier information includes a sequence number of the target reference signal resource set in the first target reference signal resource set group, and the first target reference signal resource set group is a reference signal resource set group configured for the plurality of network devices or the plurality of cells.

The following uses an example in which the first reference signal resource is SetB and the target reference signal resource set is SetA to describe an example of the first reference signal resource configuration information, an example of the fifth reference signal resource configuration information, and an example of resource configuration information for configuring the target reference signal resource set for the plurality of network devices or the plurality of cells.

Example 1

An example in which the first reference signal resource configuration information is carried in a CSI-ReportConfig field is shown as follows, where reportConfigId-SetA is an example of the first identifier information.

```
CSI-ReportConfig ::= SEQUENCE {
    reportConfigId-SetB
    reportConfigId-SetA
       ... }
```

An example in which the fifth reference signal resource configuration information is carried in a CSI-ReportConfig field is shown as follows, where reportConfigId-SetA is an example of the first identifier information, and reportConfigId-SetA' is an example of the second identifier information.

```
CSI-ReportConfig ::= SEQUENCE {
  reportConfigId-SetA
reportConfigId-SetA'
    ... }
```

An example in which resource configuration information for configuring the target reference signal resource set for the plurality of network devices or the plurality of cells is carried in a CSI-ReportConfig field is shown as follows, where reportConfigId-SetA' is an example of the second identifier information.

```
CSI-ReportConfig ::= SEQUENCE {
  reportConfigId-SetA'
    ... }
```

Example 2

An example in which the first reference signal resource configuration information is carried in a CSI-Resource-Config field may be shown as follows, where ResourceConfigId-SetA is an example of the first identifier information.

CSI-ResourceConfig ::=    SEQUENCE {

  csi-ResourceConfigId-SetB

  ResourceConfigId-SetA

  csi-RS-ResourceSetList    CHOICE {

    nzp-CSI-RS-SSB        SEQUENCE {

    ...}

An example in which the fifth reference signal resource configuration information is carried in a CSI-Resource-Config field is shown as follows, where ResourceConfigId-SetA is an example of the first identifier information, and ResourceConfigId-SetA' is an example of the second identifier information.

CSI-ResourceConfig ::=    SEQUENCE {

  ResourceConfigId-SetA

ResourceConfigId-SetA'

  csi-RS-ResourceSetList    CHOICE {

    nzp-CSI-RS-SSB        SEQUENCE {

    ...}

An example in which resource configuration information for configuring the target reference signal resource set for the plurality of network devices or the plurality of cells is carried in a CSI-ResourceConfig field is shown as follows, where ResourceConfigId-SetA' is an example of the second identifier information.

CSI-ResourceConfig ::=    SEQUENCE {

  ResourceConfigId-SetA'

  csi-RS-ResourceSetList    CHOICE {

    nzp-CSI-RS-SSB        SEQUENCE {

    ...}

Example 3

An example in which the first reference signal resource configuration information is carried in a CSI-RS-ResourcSetList field may be shown as follows, and ResourceConfigId-SetA is an example of the first identifier information.

csi-RS-ResourceSetList    CHOICE {

nzp-CSI-RS-SSB        SEQUENCE {

ResourceConfigId-SetB

ResourceConfigId-SetA

...}

An example in which the fifth reference signal resource configuration information is carried in a CSI-RS-ResourcSetList field is shown as follows, where ResourceConfigId-SetA is an example of the first identifier information, and ResourceConfigId-SetA' is an example of the second identifier information.

csi-RS-ResourceSetList    CHOICE {

nzp-CSI-RS-SSB        SEQUENCE {

ResourceConfigId-SetA

ResourceConfigId-SetA'

...}

An example in which resource configuration information for configuring the target reference signal resource set for the plurality of network devices or the plurality of cells is carried in a CSI-RS-ResourceSetList field is shown as follows, where ResourceConfigId-SetA is an example of the second identifier information.

csi-RS-ResourceSetList    CHOICE {

nzp-CSI-RS-SSB        SEQUENCE {

ResourceConfigId-SetA'

...}

It should be understood that, when the first reference signal resource configuration information includes the first identifier information, and the fifth reference signal resource configuration information include the first identifier information and the second identifier information, the terminal device may determine an association relationship between the first reference signal resource configuration information and the fifth reference signal resource configuration information based on the first identifier information. In this way, the terminal device determines, based on the second identifier information included in the fifth reference signal resource configuration information, the target reference signal resource set configured for the plurality of network devices or the plurality of cells, to determine that the target reference signal resource set includes the reference signal resource corresponding to the output information of model inference of the AI model. Finally, the terminal device may determine, based on the target reference signal resource set, the AI model corresponding to the target reference signal resource set, and perform model inference based on the AI model corresponding to the target reference signal resource set.
S940: The terminal device performs model inference based on the AI model.
After receiving the first reference signal resource configuration information, if the terminal device determines, based on the first indication information, that the first reference signal resource configured based on the first reference signal resource configuration information is for performing model inference on the AI model, or determines, based on the first indication information, that the first reference signal resource is for obtaining the data set #2, the terminal device performs model inference on the AI model based on the first reference signal resource configuration information.

For steps of performing model inference on the AI model by the terminal device based on the first reference signal resource configuration information, refer to step (I) to step (III) in S630a.

Optionally, the method 900 further includes S950 to S970.

S950: The terminal device sends information about K beams to the network device #1.

Correspondingly, the network device #1 receives the information about the K beams from the terminal device.

After performing model inference based on the AI model and obtaining the output information of the AI model, the terminal device may determine the K beams based on the output information of the AI model, where K is a positive integer.

For example, if the output information of the AI model includes RSRP that is of a reference signal corresponding to each beam in a beam universal set and that is predicted by the AI model, the terminal device may select the K beams with largest RSRP of reference signals corresponding to the beam universal set.

For another example, if the output information of the AI model includes a probability that each beam in the beam universal set is an optimal beam, the terminal device may select the K beams that are in the beam universal set and that have highest probabilities of being the optimal beams.

A value of K may be predefined in a protocol, or may be indicated by the network device #1 to the terminal device. This is not limited in this embodiment of this application.

S960: The network device #1 sends fourth reference signal resource configuration information to the terminal device.

Correspondingly, the terminal device receives the fourth reference signal resource configuration information from the network device.

The fourth reference signal resource configuration information may be carried in one or more of the following fields: a CSI report configuration field, a CSI resource configuration field, a CSI-RS resource set field, or a CSI-RS resource set list field.

The fourth reference signal resource configuration information includes ninth indication information, and the ninth indication information indicates that a fourth reference signal resource configured based on the fourth reference signal resource configuration information is for performing a non-AI-model-based operation. The network device #1 sends the fourth reference signal resource configuration information to the terminal device based on the information about the K beams, and reference signals transmitted on the fourth reference signal resource corresponds to the K beams.

For example, the ninth indication information is active state indication information of the AI model, and the ninth indication information indicates that the AI model is in a deactive (deactive) state or a disabled state.

S970: The terminal device performs the non-AI-model-based operation.

After receiving the fourth reference signal resource configuration information, if the terminal device determines, based on the ninth indication information, that the fourth reference signal resource configured based on the fourth reference signal resource configuration information is for performing the non-AI-model-based operation, the terminal device performs the non-AI-model-based operation based on the fourth reference signal resource configuration information.

The terminal device performs the non-AI-model-based operation based on the fourth reference signal resource configuration information in the following steps: The terminal device measures, based on the fourth reference signal resource configured based on the fourth reference signal resource configuration information, reference signals transmitted on the fourth reference signal resource, and obtains a signal measurement result of the reference signals transmitted on the fourth reference signal resource (for example, obtains RSRP of the reference signals transmitted on the fourth reference signal resource). The terminal device determines, based on the RSRP of the reference signals transmitted on the fourth reference signal resource, a beam corresponding to a reference signal with largest RSRP in the reference signals transmitted on the fourth reference signal resource as an optimal beam. The optimal beam may include one or more beams.

In this embodiment of this application, the first reference signal resource configuration information sent by the network device to the terminal device includes the first indication information. In this way, the terminal device can determine, based on the first indication information, that the first reference signal resource is for performing model inference on the AI model. This can prevent the terminal device from performing model training on the AI model based on the first reference signal resource, or prevent the terminal device from performing a non-AI-model-based operation based on the first reference signal resource, thereby helping balance performance and resource consumption of performing model inference on the AI model.

It may be further understood that some optional features in embodiments of this application may be independent of other features in some scenarios, or may be combined with other features in some scenarios. This is not limited.

It may be further understood that, in some of the foregoing embodiments, sending information is mentioned for a plurality of times. For example, A sends information to B. That A sends information to B may include that A directly sends the information to B, or may include that A sends the information to B through another device or network element. This is not limited.

It may be further understood that, the solutions in embodiments of this application may be appropriately combined for use, and explanations or descriptions of terms in embodiments may be mutually referenced or explained in embodiments. This is not limited.

It may be further understood that in the foregoing method embodiments, the method and the operation implemented by the network element may alternatively be implemented by a constituent component (such as a chip or a circuit) of the network element. This is not limited.

The foregoing describes, in detail with reference to FIG. 6 to FIG. 9, the methods provided in embodiments of this application. An apparatus provided in embodiments of this application is described in detail below with reference to FIG. 10 to FIG. 12. It should be understood that descriptions of apparatus embodiments correspond to the descriptions of the method embodiments. Therefore, for content that is not described in detail, refer to the foregoing method embodiments. For brevity, details are not described herein again.

FIG. 10 is a diagram of a communication apparatus 1000 according to an embodiment of this application. The apparatus 1000 includes a transceiver unit 1010 and a processing unit 1020. The transceiver unit 1010 may be configured to implement a corresponding communication function. The transceiver unit 1010 may also be referred to as a communication interface or a communication unit. The processing unit 1020 may be configured to perform processing, for example, perform a first operation based on an AI model.

Optionally, the apparatus 1000 may further include a storage unit. The storage unit may be configured to store instructions and/or data. The processing unit 1020 may read the instructions and/or the data in the storage unit, so that the apparatus implements the foregoing method embodiments.

In a design, the apparatus 1000 is configured to perform the step or procedure performed by the device in the foregoing method embodiments, the transceiver unit 1010 is configured to perform the sending and receiving related operations on a side of the device in the foregoing method embodiments, and the processing unit 1020 is configured to perform the processing-related operation on the side of the device in the foregoing method embodiments.

In a possible implementation, the apparatus 1000 is configured to perform the steps or procedures performed by the terminal device in the embodiments shown in FIG. 6 to FIG. 9. Optionally, the transceiver unit 1010 is configured to receive first reference signal resource configuration information from a network device. The first reference signal resource configuration information includes first indication information, and the first indication information indicates that a first reference signal resource configured based on the first reference signal resource configuration information is for performing a first operation based on an AI model, or the first indication information indicates that a first reference signal resource configured based on the first reference signal resource configuration information is for obtaining a data set of a first operation based on an AI model. The processing unit 1020 is configured to perform the first operation based on the AI model and the first reference signal resource configuration information.

In another possible implementation, the apparatus 1000 is configured to perform the steps or procedures performed by the network device in the embodiments shown in FIG. 6 to FIG. 9. Optionally, the transceiver unit 1010 is configured to send first reference signal resource configuration information to a terminal device. The first reference signal resource configuration information includes first indication information, and the first indication information indicates that a first reference signal resource configured based on the first reference signal resource configuration information is for performing a first operation based on an AI model, or the first indication information indicates that a first reference signal resource configured based on the first reference signal resource configuration information is for obtaining a data set of a first operation based on an AI model.

It should be understood that a specific process in which the units perform the foregoing corresponding steps is described in detail in the foregoing method embodiments, and for brevity, details are not described herein.

It should be understood that the apparatus 1000 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1000 may be specifically the device (for example, the terminal device or the network device) in the foregoing embodiments, and may be configured to perform the procedures and/or steps corresponding to the device in the foregoing method embodiments. To avoid repetition, details are not described herein again.

The apparatus 1000 in the foregoing solutions has functions of implementing corresponding steps performed by the device (for example, the terminal device or the network device) in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform receiving and sending operations and a related processing operation in the method embodiments.

In addition, the transceiver unit 1010 may alternatively be a transceiver circuit (for example, the transceiver circuit may include a receiver circuit and a transmitter circuit), and the processing unit may be a processing circuit.

It should be noted that the apparatus in FIG. 10 may be the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

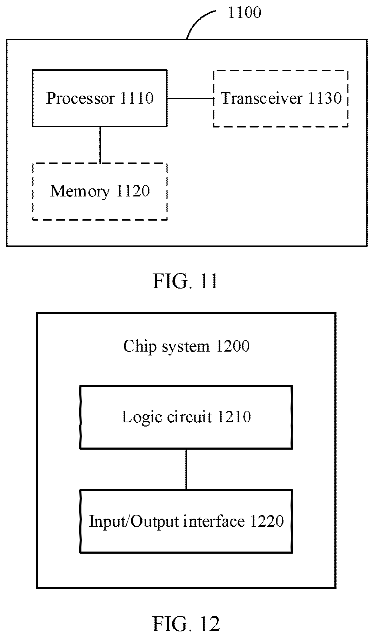

FIG. 11 is a diagram of another communication apparatus 1100 according to an embodiment of this application. The apparatus 1100 includes a processor 1110. The processor 1110 is coupled to a memory 1120. The memory 1120 is configured to store a computer program or instructions and/or data. The processor 1110 is configured to execute the computer program or the instructions stored in the memory 1120 or read the data stored in the memory 1120 to perform the methods in the foregoing method embodiments.

Optionally, there are one or more processors 1110.

Optionally, there are one or more memories 1120.

Optionally, the memory 1120 and the processor 1110 are integrated together or separately disposed.

Optionally, as shown in FIG. 11, the apparatus 1100 further includes a transceiver 1130. The transceiver 1130 is configured to receive and/or send a signal. For example, the processor 1110 is configured to control the transceiver 1130 to receive and/or send the signal.

In an example, the processor 1110 may have a function of the processing unit 1020 shown in FIG. 10, the memory 1120 may have a function of the storage unit, and the transceiver 1130 may have a function of the transceiver unit 1010 shown in FIG. 10.

In a solution, the apparatus 1100 is configured to implement the operation performed by the device (for example, the terminal device or the network device) in the foregoing method embodiments.

For example, the processor 1110 is configured to execute the computer program or the instructions stored in the memory 1120, to implement related operations of the device (for example, the terminal device or the network device) in the foregoing method embodiments.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

The apparatus in FIG. 11 may be the device in the foregoing embodiments, or may be a chip or a chip system, for example, a system on chip (system on chip, SoC). The transceiver may be an input/output circuit or a communication interface. The processor is a processor, a microprocessor, or an integrated circuit integrated on the chip. This is not limited herein.

It should be further noted that the memory described in this specification is intended to include but is not limited to these memories and any memory of another proper type.

FIG. 12 is a diagram of a chip system 1200 according to an embodiment of this application. The chip system 1200 (which may also be referred to as a processing system) includes a logic circuit 1210 and an input/output interface (input/output interface) 1220.

The logic circuit 1210 may be a processing circuit in the chip system 1200. The logic circuit 1210 may be coupled and connected to a storage unit, and invoke instructions in the storage unit, so that the chip system 1200 can implement methods and functions in embodiments of this application. The input/output interface 1220 may be an input/output circuit in the chip system 1200, and outputs information processed by the chip system 1200, or inputs to-be-processed data or signaling information to the chip system 1200 for processing.

Specifically, for example, if the chip system 1200 is installed on a terminal device, the logic circuit 1210 is coupled to the input/output interface 1220, and the input/output interface 1220 may input first reference signal resource configuration information to the logic circuit 1210 for processing, for example, performing a first operation based on an AI model and the first reference signal resource configuration information. For another example, if the chip system 1200 is installed in a network device, the logic circuit 1210 is coupled to the input/output interface 1220, and the input/output interface 1220 may output first reference signal resource configuration information to a terminal device.

In a solution, the chip system 1200 is configured to implement the operation performed by the device (for example, the terminal device or the network device) in the foregoing method embodiments.

For example, the logic circuit 1210 is configured to implement the processing-related operation performed by the device (for example, the terminal device or the network device) in the foregoing method embodiments, and the input/output interface 1220 is configured to implement the sending and/or receiving related operations/operation performed by the device (for example, the terminal device or the network device) in the foregoing method embodiments.

An embodiment of this application further provides a computer-readable storage medium. The computer-readable storage medium stores computer instructions for implementing the method performed by the device (for example, the terminal device or the network device) in the foregoing method embodiments.

For example, when a computer program is executed by a computer, the computer is enabled to implement the method performed by the device (for example, the terminal device or the network device) in the foregoing method embodiments.

An embodiment of this application further provides a computer program product, including instructions. When the instructions are executed by a computer, the method performed by the device (for example, the terminal device or the network device) in the foregoing method embodiments is implemented.

An embodiment of this application further provides a communication system. The communication system includes the terminal device and/or the network device in the foregoing embodiments. For example, the system includes the terminal device and/or the network device in the embodiment shown in FIG. 6 to FIG. 9.

For explanations and beneficial effect of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, performed by a terminal device or a chip used in a terminal device, comprising:
receiving first reference signal resource configuration information from a network device, wherein the first reference signal resource configuration information comprises first indication information, and the first indication information indicates that a first reference signal resource configured based on the first reference signal resource configuration information is for performing a first operation based on an artificial intelligence AI model, or the first indication information indicates that a first reference signal resource configured based on the first reference signal resource configuration information is for obtaining a data set of a first operation based on an artificial intelligence AI model.

2. The method according to claim 1, wherein the method further comprises:
performing the first operation based on the AI model and the first reference signal resource configuration information.

3. The method according to claim 1 or 2, wherein the first operation is model training or model inference on the AI model.

4. The method according to claim 3, wherein the first operation is model inference on the AI model, and the method further comprises:
receiving second reference signal resource configuration information from the network device, wherein the second reference signal resource configuration information comprises second indication information, and the second indication information indicates that a second reference signal resource configured based on the second reference signal resource configuration information is for performing model training on the AI model, or the second indication information indicates that a second reference signal resource configured based on the second reference signal resource configuration information is for obtaining a data set for performing model training on the AI model.

5. The method according to claim 4, wherein the first reference signal resource configuration information further comprises third indication information indicative of an association relationship between the first reference signal resource and the second reference signal resource; or
the second reference signal resource configuration information further comprises fourth indication information indicative of an association relationship between the second reference signal resource and the first reference signal resource.

6. The method according to claim 3, wherein the first operation is model inference on the AI model;

the first reference signal resource is a reference signal resource corresponding to input information for model inference of the AI model; and
the first reference signal resource configuration information further comprises first identifier information, the first identifier information corresponds to a target reference signal resource set, and the target reference signal resource set comprises a reference signal resource corresponding to a label in a model training process of the AI model.

7. The method according to claim 3, wherein the first operation is model training on the AI model, and the first indication information further indicates that the first reference signal resource is for obtaining a label of performing model training on the AI model.

8. The method according to claim 3, wherein the first reference signal resource configuration information further comprises fifth indication information, and the fifth indication information indicates that the first reference signal resource is for obtaining a label of performing model training on the AI model.

9. The method according to claim 7 or 8, wherein the method further comprises:
receiving third reference signal resource configuration information from the network device, wherein the third reference signal resource configuration information comprises sixth indication information, and the sixth indication information indicates that a third reference signal resource configured based on the third reference signal resource configuration information is for obtaining input information of performing model training on the AI model.

10. The method according to claim 9, wherein the first reference signal resource configuration information further comprises seventh indication information indicative of an association relationship between the first reference signal resource and the third reference signal resource; or

the third reference signal resource configuration information further comprises eighth indication information indicative of an association relationship between the first reference signal resource and the third reference signal resource; and

the method further comprises:

obtaining the input information and the label based on the association relationship between the first reference signal resource and the third reference signal resource.

11. The method according to any one of claims 1 to 10, wherein the method further comprises:

receiving fourth reference signal resource configuration information from the network device, wherein the fourth reference signal resource configuration information comprises ninth indication information, and the ninth indication information indicates that a fourth reference signal resource configured based on the fourth reference signal resource configuration information is for performing a non-AI-model-based operation; and

performing, by the terminal device, the non-AI-model-based operation based on the fourth reference signal resource configuration information.

12. The method according to claim 3, wherein the first operation is model training on the AI model, and the first indication information further indicates that the first reference signal resource is for obtaining input information of performing model training on the AI model.

13. The method according to claim 3, wherein the first operation is model inference based on the AI model, and the first indication information further indicates that the first reference signal resource is for obtaining input information of performing model inference on the AI model.

14. A communication method, comprising:

sending first reference signal resource configuration information to a terminal device, wherein the first reference signal resource configuration information comprises first indication information, and the first indication information indicates that a first reference signal resource configured based on the first reference signal resource configuration information is for performing a first operation based on an artificial intelligence AI model, or the first indication information indicates that a first reference signal resource configured based on the first reference signal resource configuration information is for obtaining a data set of a first operation based on an AI model.

15. The method according to claim 14, wherein the first operation is model training or model inference on the AI model.

16. The method according to claim 15, wherein the first operation is model inference on the AI model, and the method further comprises:

sending second reference signal resource configuration information to the terminal device, wherein the second reference signal resource configuration information comprises second indication information, and the second indication information indicates that a second reference signal resource configured based on the second reference signal resource configuration information is for performing model training on the AI model, or the second indication information indicates that a second reference signal resource configured based on the second reference signal resource configuration information is for obtaining a data set for performing model training on the AI model.

17. The method according to claim 16, wherein the first reference signal resource configuration information further comprises third indication information indicative of an association relationship between the first reference signal resource and the second reference signal resource; or the second reference signal resource configuration information further comprises fourth indication information indicative of an association relationship between the second reference signal resource and the first reference signal resource.

18. The method according to claim 15, wherein the first operation is model inference on the AI model; and

the first reference signal resource is a reference signal resource corresponding to input information for model inference of the AI model, and the first reference signal resource configuration information further comprises first identifier information, the first identifier information corresponds to a target reference signal resource set, and the target reference signal resource set comprises a reference signal resource corresponding to a label in a model training process of the AI model.

19. The method according to claim 18, wherein the method further comprises:

sending fifth reference signal resource configuration information to the terminal device, wherein the fifth reference signal resource configuration information is for configuring the target reference signal resource set, the fifth reference signal resource configuration information comprises the first identifier information, the fifth reference signal resource configuration information further comprises second identifier information, and the second identifier information corresponds to the target reference signal resource set.

20. The method according to claim 15, wherein the first operation is model training on the AI model, and the first indication information further indicates that the first reference signal resource is for obtaining a label of performing model training on the AI model.

21. The method according to claim 15, wherein the first reference signal resource configuration information further comprises fifth indication information, and the fifth indication information indicates that the first reference signal resource is for obtaining a label of performing model training on the AI model.

22. The method according to claim 20 or 21, wherein the method further comprises:
sending third reference signal resource configuration information to the terminal device, wherein the third reference signal resource configuration information comprises sixth indication information, and the sixth indication information indicates that a third reference signal resource configured based on the third reference signal resource configuration information is for obtaining input information of performing model training on the AI model.

23. The method according to claim 22, wherein the first reference signal resource configuration information further comprises seventh indication information indicative of an association relationship between the first reference signal resource and the third reference signal resource; or
the third reference signal resource configuration information further comprises eighth indication information indicative of an association relationship between the first reference signal resource and the third reference signal resource.

24. The method according to any one of claims 14 to 23, wherein the method further comprises:
sending fourth reference signal resource configuration information to the terminal device, wherein the fourth reference signal resource configuration information comprises ninth indication information, and the ninth indication information indicates that a fourth reference signal resource configured based on the fourth reference signal resource configuration information is for performing a non-AI-model-based operation.

25. The method according to claim 15, wherein the first operation is model training on the AI model, and the first indication information further indicates that the first reference signal resource is for obtaining input information of performing model training on the AI model.

26. The method according to claim 15, wherein the first operation is model inference on the AI model, and the first indication information further indicates that the first reference signal resource is for obtaining input information of performing model inference on the AI model.

27. The method according to any one of claims 14 to 26, wherein the method further comprises:
receiving first information from the terminal device, wherein the first information is for requesting the first operation based on the AI model.

28. A communication method, comprising:
receiving first reference signal resource configuration information from a network device, wherein the first reference signal resource configuration information comprises first indication information, and the first indication information indicates that a first reference signal resource configured based on the first reference signal resource configuration information is for performing model training on an AI model, or the first indication information indicates that a first reference signal resource configured based on the first reference signal resource configuration information is for obtaining a data set for performing model training on an AI model.

29. The method according to claim 28, wherein the method further comprises:
performing model training on the AI model based on the first reference signal resource configuration information.

30. The method according to claim 28 or 29, wherein the first indication information further indicates that the first reference signal resource is for obtaining a label of performing model training on the AI model.

31. The method according to claim 28 or 29, wherein the first reference signal resource configuration information further comprises fifth indication information, and the fifth indication information indicates that the first reference signal resource is for obtaining a label of performing model training on the AI model.

32. The method according to any one of claims 28 to 31, wherein the method further comprises:
receiving third reference signal resource configuration information from the network device, wherein the third reference signal resource configuration information comprises sixth indication information, and the sixth indication information indicates that a third reference signal resource configured based on the third reference signal resource configuration information is for obtaining input information of performing model training on the AI model.

33. The method according to claim 32, wherein the first reference signal resource configuration information further comprises seventh indication information indicative of an association relationship between the first reference signal resource and the third reference signal resource; or
the third reference signal resource configuration information further comprises eighth indication information indicative of an association relationship between the first reference signal resource and the third reference signal resource.

34. The method according to claim 32 or 33, wherein the method further comprises:
obtaining the input information and the label based on the association relationship between the first reference signal resource and the third reference signal resource.

35. The method according to any one of claims 28 to 34, wherein the method further comprises:
sending first information to the network device, wherein the first information is for requesting to perform model training based on the AI model, and the first information comprises one or more of the following: an identifier of the AI model, computing power information of the terminal device, sparse beam indication information, or a training mechanism of the AI model.

36. A communication method, comprising:
sending first reference signal resource configuration information to a terminal device, wherein the first reference signal resource configuration information comprises first indication information, and the first indication information indicates that a first reference signal resource configured based on the first reference signal resource configuration information is for performing model training on an AI model, or the first indication information indicates that a first reference signal resource configured based on the first reference signal resource configuration information is for obtaining a data set for performing model training on an AI model.

37. The method according to claim 36, wherein the first indication information further indicates that the first reference signal resource is for obtaining a label of performing model training on the AI model.

38. The method according to claim 36, wherein the first reference signal resource configuration information further comprises fifth indication information, and the fifth indication information indicates that the first reference signal resource is for obtaining a label of performing model training on the AI model.

39. The method according to any one of claims 36 to 38, wherein the method further comprises:
sending third reference signal resource configuration information to the terminal device, wherein the third reference signal resource configuration information comprises sixth indication information, and the sixth indication information indicates that a third reference signal resource configured based on the third reference signal resource configuration information is for obtaining input information of performing model training on the AI model.

40. The method according to claim 39, wherein the first reference signal resource configuration information further comprises seventh indication information indicative of an association relationship between the first reference signal resource and the third reference signal resource; or
the third reference signal resource configuration information further comprises eighth indication information indicative of an association relationship between the first reference signal resource and the third reference signal resource.

41. The method according to any one of claims 36 to 40, wherein the method further comprises:
receiving first information from the terminal device, wherein the first information is for requesting to perform model training based on the AI model, and the first information comprises one or more of the following:
an identifier of the AI model, computing power information of the terminal device, sparse beam indication information, or a training mechanism of the AI model.

42. A communication method, comprising:

receiving first reference signal resource configuration information from a network device, wherein the first reference signal resource configuration information comprises first indication information, and the first indication information indicates that a first reference signal resource configured based on the first reference signal resource configuration information is for performing model inference on an AI model, or the first indication information indicates that a first reference signal resource configured based on the first reference signal resource configuration information is for obtaining a data set for performing model inference on an AI model.

43. The method according to claim 42, wherein the method further comprises:

performing model inference based on the AI model and the first reference signal resource configuration information.

44. The method according to claim 42 or 43, wherein the method further comprises:

receiving second reference signal resource configuration information from the network device, wherein the second reference signal resource configuration information comprises second indication information, and the second indication information indicates that a second reference signal resource configured based on the second reference signal resource configuration information is for performing model training on the AI model, or the second indication information indicates that a second reference signal resource configured based on the second reference signal resource configuration information is for obtaining a data set for performing model training on the AI model.

45. The method according to any one of claims 42 to 44, wherein the first reference signal resource configuration information further comprises third indication information indicative of an association relationship between the first reference signal resource and the second reference signal resource; or

the second reference signal resource configuration information further comprises fourth indication information indicative of an association relationship between the second reference signal resource and the first reference signal resource.

46. The method according to any one of claims 42 to 45, wherein the first reference signal resource is a reference signal resource corresponding to input information for model inference of the AI model, and the first reference signal resource configuration information further comprises first identifier information, the first identifier information corresponds to a target reference signal resource set, and the target reference signal resource set comprises a reference signal resource corresponding to a label in a model training process of the AI model.

47. The method according to claim 46, wherein the method further comprises:

receiving fifth reference signal resource configuration information from the network device, wherein the fifth reference signal resource configuration information is for configuring the target reference signal resource set, the fifth reference signal resource configuration information comprises the first identifier information, the fifth reference signal resource configuration information further comprises second identifier information, and the second identifier information corresponds to the target reference signal resource set.

48. The method according to any one of claims 42 to 47, wherein the method further comprises:

sending first information to the network device, wherein the first information is for requesting to perform model inference on the AI model, and the first information comprises one or more of the following:

an identifier of the AI model, indication information #1, or sparse beam indication information; and the indication information #1 indicates that training of the AI model is completed.

49. A communication method, comprising:

sending first reference signal resource configuration information to a terminal device, wherein the first reference signal resource configuration information comprises first indication information, and the first indication information indicates that a first reference signal resource configured based on the first reference signal resource configuration information is for performing model inference on an AI model, or the first indication information indicates that a first reference signal resource configured based on the first reference signal resource configuration information is for obtaining a data set for performing model inference on an AI model.

50. The method according to claim 49, wherein the method further comprises:

sending second reference signal resource configuration information to the terminal device, wherein the second reference signal resource configuration information comprises second indication information, and the second indication information indicates that a second reference signal resource configured based on the second reference signal resource configuration information is for performing model training on the AI model, or the second indication information indicates that a second reference signal resource configured based on the second reference signal resource configuration information is for obtaining a data set for performing model training on the AI model.

51. The method according to claim 49 or 50, wherein the first reference signal resource configuration information further comprises third indication information indicative of an association relationship between the first reference signal resource and the second reference signal resource; or
the second reference signal resource configuration information further comprises fourth indication information indicative of an association relationship between the second reference signal resource and the first reference signal resource.

52. The method according to any one of claims 49 to 51, wherein the first reference signal resource is a reference signal resource corresponding to input information for model inference of the AI model, and the first reference signal resource configuration information further comprises first identifier information, the first identifier information corresponds to a target reference signal resource set, and the target reference signal resource set comprises a reference signal resource corresponding to a label in a model training process of the AI model.

53. The method according to claim 52, wherein the method further comprises:
sending fifth reference signal resource configuration information to the terminal device, wherein the fifth reference signal resource configuration information is for configuring the target reference signal resource set, the fifth reference signal resource configuration information comprises the first identifier information, the fifth reference signal resource configuration information further comprises second identifier information, and the second identifier information corresponds to the target reference signal resource set.

54. The method according to any one of claims 49 to 53, wherein the method further comprises:
receiving first information from the terminal device, wherein the first information is for requesting to perform model inference on the AI model, and the first information comprises one or more of the following: an identifier of the AI model, indication information #1, or sparse beam indication information; and the indication information #1 indicates that training of the AI model is completed.

55. A communication apparatus, comprising a module or unit configured to perform the method according to any one of claims 1 to 54.

56. A communication apparatus, comprising at least one processor coupled to a memory, wherein the memory is configured to store a program, and the at least one processor is configured to execute the computer program or instructions stored in the memory, to perform the method according to any one of claims 1 to 54.

57. A computer-readable storage medium, wherein the computer-readable storage medium stores program code to be executed by a device, and the program code is used to perform the method according to any one of claims 1 to 54.

58. A computer program product, wherein the computer program product comprises instructions, and when the computer program product runs on a computer, the computer is caused to perform the method according to any one of claims 1 to 54.

59. A chip, wherein the chip comprises a processor and a communication interface, and the processor reads, through the communication interface, instructions stored in a memory, to perform the method according to any one of claims 1 to 54.

60. A communication system, comprising a terminal device and/or a network device, wherein the terminal device is configured to perform the method according to any one of claims 1 to 13, perform the method according to any one of claims 28 to 35, or perform the method according to any one of claims 42 to 48; and the network device is configured to perform the method according to any one of claims 14 to 27, perform the method according to any one of claims 36 to 41, or perform the method according to any one of claims 49 to 54.

100

120j

120i

110b

120d

120e

110a

120a

120f

120g

120h

120b

120c

## FIG. 1

$w_1 * x_1$

$w_2 * x_2$

Neuron

$$y = f\left(\sum_{i=1}^{i=n} w_i * x_i + b\right)$$

y

$w_n * x_n$

## FIG. 2

FIG. 3

FIG. 4

Narrow beam

Narrow beam

(a)

Narrow beam

Narrow beam

(b)

FIG. 5

600

| Network device | | Terminal device | | Training device |

S610: First information

S620: First reference signal resource configuration information

S630a: Perform a first operation based on an AI model

S630b1: Second information

S630b2: Perform the first operation based on the AI model

FIG. 6

700

| Network device | | Terminal device |

S710: First information (requesting to perform model training on an AI model)

S720: Second reference signal resource configuration information

S730: Perform model training on the AI model

S740: Third information (requesting to perform model inference based on the AI model)

S750: First reference signal resource configuration information

S760: Perform model inference based on the AI model

FIG. 7

800

| Network device | | Terminal device |

S810: First information (requesting to perform model training on an AI model)

S820: First reference signal resource configuration information

S830: Third reference signal resource configuration information

S840: Perform model training on the AI model

S850: Third information (requesting to perform model inference based on the AI model)

S860: Sixth reference signal resource configuration information

S870: Perform model inference based on the AI model

FIG. 8

900

| Network device #1 | | Terminal device |

S910: First information (requesting to
perform model inference on an AI model)

S920: First reference signal resource configuration information

S930: Fifth reference signal resource configuration information

S940: Perform model
inference based on the AI
model

S950: Information about K beams

S960: Fourth reference signal resource configuration information

S970: Perform a non-AI-
model-based operation

FIG. 9

1000

Transceiver unit 1010

Processing unit 1020

FIG. 10

1100

Processor 1110 ——— Transceiver 1130

Memory 1120

FIG. 11

Chip system 1200

Logic circuit 1210

Input/Output interface 1220

FIG. 12

## INTERNATIONAL SEARCH REPORT

| International application No. |
|---|
| **PCT/CN2024/075890** |

### A.    CLASSIFICATION OF SUBJECT MATTER

H04W72/23(2023.01)i

According to International Patent Classification (IPC) or to both national classification and IPC

### B.    FIELDS SEARCHED

Minimum documentation searched (classification system followed by classification symbols)

IPC: H04W, H04Q, H04L

Documentation searched other than minimum documentation to the extent that such documents are included in the fields searched

Electronic data base consulted during the international search (name of data base and, where practicable, search terms used)

CNTXT, ENTXTC, VEN, 3GPP: 参考信号, 导频, 资源, 配置, 分配, 人工智能, 机器学习, 深度学习, 神经网络, 模型, 训练, 推理, 推导, 推断, 波束, RS, reference signal, resource, configure, distribute, allocate, AI, ML, DL, neural network, NN, model, train, derivate, beam

### C.    DOCUMENTS CONSIDERED TO BE RELEVANT

| Category* | Citation of document, with indication, where appropriate, of the relevant passages | Relevant to claim No. |
|---|---|---|
| X | WO 2022256981 A1 (APPLE INC.) 15 December 2022 (2022-12-15)<br>claims 1-40, and description, paragraphs [0037]-[0040] | 1-60 |
| A | CN 115473614 A (CHINA MOBILE COMMUNICATIONS CO., LTD. RESEARCH INSTITUTE et al.) 13 December 2022 (2022-12-13)<br>entire document | 1-60 |
| A | WO 2022208671 A1 (NTT DOCOMO, INC.) 06 October 2022 (2022-10-06)<br>entire document | 1-60 |
| A | NOKIA et al. "Evaluation on ML for beam management"<br>*3GPP TSG RAN WG1 #109, R1-2204573,* 20 May 2022 (2022-05-20),<br>entire document | 1-60 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **16 April 2024** | **23 April 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/075890**

| Patent document cited in search report | | | Publication date (day/month/year) | Patent family member(s) | | | Publication date (day/month/year) |
|---|---|---|---|---|---|---|---|
| WO | 2022256981 | A1 | 15 December 2022 | CN | 117322055 | A | 29 December 2023 |
| CN | 115473614 | A | 13 December 2022 | None | | | |
| WO | 2022208671 | A1 | 06 October 2022 | EP | 4319377 | A1 | 07 February 2024 |

Form PCT/ISA/210 (patent family annex) (July 2022)

**REFERENCES CITED IN THE DESCRIPTION**

**Patent documents cited in the description**

- CN 202310156061